# EUROPÄISCHE PATENTSCHRIFT

(11) **EP 3 134 666 B1**
(45) Veröffentlichungstag und Bekanntmachung des Hinweises auf die Patenterteilung: **28.11.2018**
(21) Anmeldenummer: 15713153.3
(22) Anmeldetag: 24.03.2015
(51) Int. Cl.: F16J 15/10, F16J 15/08, F16J 15/06

(54) **VERFAHREN ZUM HERSTELLEN EINES FUNKTIONSELEMENTS UND FUNKTIONSELEMENT**
METHOD FOR PRODUCING A FUNCTIONAL ELEMENT, AND FUNCTIONAL ELEMENT
PROCÉDÉ DE PRODUCTION D'UN ÉLÉMENT FONCTIONNEL ET ÉLÉMENT FONCTIONNEL

(30) Priorität: 24.04.2014 DE 102014105803
(43) Veröffentlichungstag der Anmeldung: 01.03.2017
(73) Patentinhaber: ElringKlinger AG, 72581 Dettingen (DE)
(72) Erfinder: SCHÖLLHAMMER, Jochen, 72581 Dettingen (DE)
(74) Vertreter: Hoeger, Stellrecht & Partner Patentanwälte mbB
(86) Internationale Anmeldenummer: PCT/EP2015/056213
(87) Internationale Veröffentlichungsnummer: WO 2015/161970

(56) Entgegenhaltungen:
- WO-A1-2012/136384
- DE-A1-102007 019 946
- DE-U1-202010 006 768
- US-A1- 2014 090 343

## Beschreibung

Die Erfindung betrifft ein Verfahren zum Herstellen eines Funktionselements, insbesondere für Flachdichtungen, bei welchem eine Funktionslage mit mindestens einem Siebbereich gebildet wird, in welchem zwischen Fäden eines Gewebes oder Geflechts Durchlassöffnungen zum Durchströmen für ein Fluid freiliegend sind.

Derartige Verfahren sind aus dem Stand der Technik bekannt, wobei das Problem darin besteht, um den Siebbereich einen querschnittsdichten Abdichtbereich zu bilden.

Diese Aufgabe wird bei einem Verfahren der eingangs beschriebenen Art erfindungsgemäß dadurch gelöst, dass die Funktionslage mit mindestens einem zumindest den Siebbereich umschließenden Abdichtbereich versehen wird, in welchem beiderseits des Gewebes oder Geflechts auf diesem Abdichtmateriallagen aufgelegt werden, die zumindest bei einer flächenhaften Beaufschlagung von 5 MPa oder mehr mit dem Gewebe oder Geflecht einen querschnittsdichten Lagenverbund ausbilden.

Der Vorteil der erfindungsgemäßen Lösung ist darin zu sehen, dass damit in einfacher Weise die Möglichkeit besteht, einen querschnittsdichten Lagenverbund bereits dadurch herzustellen, dass Abdichtmateriallagen beiderseits auf das Gewebe oder Geflecht aufgelegt werden, um dann mit diesem, zumindest bei der genannten flächenhaften Beaufschlagung mit einer Druckkraft von 5 MPa, den querschnittsdichten Lagenverbund zu ergeben.

Unter einem querschnittsdichten Lagenverbund ist dabei zu verstehen, dass ein Gasdurchsatz durch einen einen Siebbereich umschließenden Abdichtbereich bei einem Druck von 1 bar im Siebbereich kleiner ist als 5 ml/Min.

Hinsichtlich der Ausbildung der Abdichtmateriallagen zum Erzeugen des querschnittsdichten Lageverbunds wurden keine näheren Angaben gemacht.

So sieht eine vorteilhafte Lösung vor, dass die Abdichtmateriallagen mit einer dem Gewebe oder Geflecht zugewandten Auflageseite versehen werden, deren Oberflächenstruktur an die Struktur des Gewebes oder Geflechts angepasst ist.

Um insbesondere die an die Struktur des Gewebes oder Geflechts angepasste Oberflächenstruktur zu erzeugen, ist vorzugsweise vorgesehen, dass die Abdichtmateriallagen aus einem formbaren Material hergestellt und beiderseits auf das Gewebe oder Geflecht aufgelegt werden.

Grundsätzlich könnte dabei die Anpassung der Oberflächenstruktur der Abdichtmateriallagen an das Gewebe oder Geflecht vor dem Auflegen derselben auf das Gewebe oder Geflecht erfolgen.

Besonders günstig ist es, wenn die dem Gewebe oder Geflecht zugewandte Auflageseite der Abdichtmateriallagen während eines formbaren Zustands des Materials der Abdichtmateriallagen gebildet wird.

Besonders günstig ist es dabei, wenn der formbare Zustand des Materials der Abdichtmateriallagen bei der Herstellung der Abdichtmateriallagen erzeugt wird.

Das heißt, dass die Abdichtmateriallagen insbesondere bereits im formbaren Zustand auf das Gewebe oder Geflecht aufgelegt werden.

Beispielsweise kann dabei der formbare Zustand des Materials der Abdichtmateriallagen durch eine chemische Behandlung, beispielsweise mittels eines Lösungsmittels, erreicht werden.

Eine andere vorteilhafte Lösung sieht vor, dass der formbare Zustand des Materials der Abdichtmateriallagen durch ein Erwärmen derselben erreicht wird.

Besonders vorteilhaft ist es dabei, wenn der formbare Zustand des Materials der Abdichtmateriallagen erst nach Auflegen derselben auf das Gewebe oder Geflecht erreicht wird.

Dies ist beispielsweise dann möglich, wenn der formbare Zustand des Materials der Abdichtmateriallagen durch Erwärmen erreicht werden kann.

Insbesondere ist es vorteilhaft, wenn das Material der Abdichtmateriallagen im formbaren Zustand in das Gewebe oder Geflecht zumindest partiell eingepresst wird, um so eine Anpassung der Auflageseiten an die Struktur des Gewebes oder Geflechts zu erreichen.

Dabei ist es besonders vorteilhaft, dass die Anpassung der Auflageseite an die Form des Gewebes oder Geflechts unmittelbar an der Stelle erfolgt, an welcher die Abdichtmateriallagen mit dem Gewebe oder Geflecht zusammenwirken sollen, um den querschnittsdichten Materialverbund zu bilden.

Um sicherzustellen, dass die Zuschnittskonturen der Abdichtmateriallagen auch im formbaren Zustand des Materials der Abdichtmateriallagen nicht verändert werden, ist vorzugsweise vorgesehen, dass die Abdichtmateriallagen im formbaren Zustand des Materials der Abdichtmateriallagen zuschnittskonturstabil bleiben.

Das heißt, dass durch den formbaren Zustand keine derartige Deformation des Materials der Abdichtmateriallagen möglich ist, bei welcher sich eine Zuschnittskontur nennenswert, das heißt um mehr als 10%, noch besser mehr als 5%, ihrer Dimensionen, verändert.

Eine derartige zuschnittskonturstabile Form der Abdichtmateriallagen ist insbesondere auch dann erreichbar, wenn deren Dicke so bemessen ist, dass bei einem Einpressen des Materials der Abdichtmateriallagen in das Gewebe oder Geflecht nur eine Materialschicht mit einer geringfügigen Dicke in Richtung der Höhe über das Gewebe oder Geflecht übersteht.

Damit wird beim Einpressen des Materials der Abdichtmateriallagen in das Gewebe oder Geflecht kein Materialfluss in Richtung parallel zur Fläche, in welcher sich das Gewebe oder Geflecht erstreckt, erzeugt, der eine signifikante Änderung der Zuschnittskonturen der Abdichtmateriallagen zur Folge haben könnte.

Eine besonders günstige Lösung sieht dabei vor, dass die Abdichtmateriallagen im formbaren Zustand des Materials der Abdichtmateriallagen plastisch verformbar sind, das heißt, dass dadurch ein Materialfluss innerhalb der Abdichtmateriallagen entsteht, der zu der Anpassung der Oberflächenstrukturen der Auflageseiten der Abdichtmateriallagen an das Gewebe oder Geflecht führt.

Insbesondere ist dabei vorgesehen, dass das Material der Abdichtmateriallagen im formbaren Zustand bei einer flächenhaften Beaufschlagung durch einen Druck von 0,1 MPa oder mehr sich plastisch verformt.

Dadurch ist festgelegt, welche maximale Zähigkeit oder Viskosität das Material der Abdichtmateriallagen aufweisen kann, wenn eine Anpassung der Oberflächenstrukturen der Auflageseiten der Abdichtmateriallagen an die Struktur des Gewebes oder Geflechts im erfindungsgemäßen Sinne erfolgen soll.

Um außerdem ein Zerfließen des Materials der Abdichtmateriallagen im formbaren Zustand zu vermeiden, ist vorzugsweise vorgesehen, dass das Material der Abdichtmateriallagen im formbaren Zustand und bei einer flächenhaften Beaufschlagung mit einem Druck von weniger als 0,05 MPa formstabil bleibt.

Insbesondere ist vorgesehen, dass das Material der Abdichtmateriallagen im formbaren Zustand eine Viskosität im Wertebereich von 10 Mooney-Viskosität bis 120 Mooney-Viskosität aufweist.

Eine Lösung kann vorsehen, dass durch das Verpressen des formbaren Materials der Abdichtmateriallagen die Durchlassöffnungen des Gewebes oder Geflechts verschlossen und auch die Fäden umschließende Raumbereiche des Gewebes oder Geflechts möglichst weitgehend oder auch ganz ausgefüllt werden.

Das heißt, dass in diesem Fall durch das Füllmaterial nicht nur die Durchlassöffnungen verschlossen werden, sondern die sich an die Fäden, insbesondere angrenzend an Kreuzungsstellen, anschließenden Raumbereiche weitgehend oder ganz ausgefüllt werden.

Damit lassen sich weitestgehend Spalten oder Hohlräume vermeiden, die die Querschnittsdichtigkeit im Abdichtbereich beeinträchtigen könnten.

Besonders günstig ist es für ein dauerhaftes Verschließen der Durchlassöffnungen, wenn das Material der Abdichtmateriallagen so verpresst wird, dass dieses in die Durchlassöffnungen eindringt und diese zumindest teilweise, durchsetzt.

Um eine möglichst optimale Abdichtung des Funktionselements im Abdichtbereich zu ermöglichen, ist vorzugsweise vorgesehen, dass durch das Verpressen des formbaren Materials der Abdichtmateriallagen beiderseits des Gewebes oder Geflechts eine zur Abdichtung gegen eine Anlagefläche geeignete Dichtoberfläche gebildet wird.

Eine derartige Dichtoberfläche ist beispielsweise so ausgebildet, dass sie eine Oberflächenrauigkeit aufweist, die kleiner ist als eine Fadendicke, noch besser kleiner als die Hälfte einer Fadendicke und vorzugsweise kleiner als ein Zehntel einer Fadendicke.

Insbesondere ist es vorteilhaft, wenn die Oberflächenrauigkeit weniger als 20µm, noch besser weniger als 10µm beträgt.

Damit stehen ausreichend präzise Dichtoberflächen zur Verfügung, um ein Abdichten des Funktionselements mit einfachen Mitteln dauerhaft realisieren zu können.

Insbesondere ist dabei vorgesehen, dass die jeweilige Dichtoberfläche zur Abdichtung gegen eine Anlagefläche einer höhenunelastischen Baugruppe ausgebildet ist.

Das heißt, dass die Oberflächenqualität der Dichtoberfläche so gut ist, dass die geringe Elastizität des Abdichtbereichs ausreichend ist, um gegenüber einer Anlagefläche einer höhenunelastischen Baugruppe eine ausreichend gute Abdichtung zu erreichen.

Hinsichtlich der Art und Weise, wie das formbare Material der Abdichtmateriallagen in den später erwünschten nicht formbaren Zustand übergehen soll, wurden bislang keine näheren Angaben gemacht.

Im Falle eines Materials, welches durch Erwärmen in einen formbaren Zustand bringbar ist, kann in einfacher Weise wieder das Erkalten des Materials abgewartet werden, um den nicht formbaren Zustand wieder zu erreichen.

Im Fall einer chemischen Vorgehensweise zur Herstellung des formbaren Zustands, beispielsweise einer Behandlung mit einem Lösungsmittel, kann der nicht formbare Zustand ebenfalls dadurch wieder erreicht werden, dass das Verdampfen des Lösungsmittels abgewartet wird.

Eine andere Art der Vorgehensweise zum Erreichen des nicht formbaren Zustands sieht vor, dass die Abdichtmateriallagen aus einem Material hergestellt werden, das im Zuge einer Beaufschlagung mit einem Druck im Bereich von 10 MPa bis 50 MPa von dem formbaren in den nicht formbaren Zustand übergeht.

Eine besonders günstige Lösung sieht vor, dass die Abdichtmateriallagen im nicht formbaren Zustand des Materials der Abdichtmateriallagen elastisch verformbar ausgebildet sind.

Dieses elastische Verhalten der Abdichtmateriallagen im nicht formbaren Zustand ermöglicht es, wie nachfolgend dargelegt, in einfacher Weise einen querschnittsdichten Zustand zu erreichen.

Besonders günstig ist es, wenn die Abdichtmateriallagen im nicht formbaren Zustand des Materials der Abdichtmateriallagen höhenelastisch verformbar ausgebildet sind, so dass insbesondere die Möglichkeit besteht, die Abdichtmateriallagen gleichzeitig als Dichtelemente einzusetzen.

Da zumindest bei einigen Ausführungsformen die erfindungsgemäß vorgesehenen Abdichtmateriallagen eine Viskosität aufweisen, die eine vollständige Anpassung an den Verlauf der Fäden des Gewebes oder Geflechts verhindert sieht eine vorteilhafte Lösung vor, dass die Abdichtmateriallagen im nicht formbaren Zustand ohne flächenhafte Beaufschlagung mit dem Gewebe oder Geflecht hohle Raumbereiche bilden.

Hinsichtlich der Verbindung zwischen dem Gewebe oder Geflecht und den Abdichtmateriallagen wurden bislang keine näheren Angaben gemacht.

So sieht eine vorteilhafte Lösung vor, dass die Abdichtmateriallagen sowie das Gewebe oder Geflecht durch Haftung der Abdichtmateriallagen an dem Gewebe oder Geflecht miteinander verbunden werden, das heißt, dass insbesondere eine unmittelbare Klebeverbindung zwischen den Abdichtmateriallagen und dem Gewebe oder Geflecht, insbesondere den Fäden derselben, hergestellt wird.

Dies ist insbesondere dadurch realisierbar, wenn die Abdichtmateriallagen aus einem das Gewebe oder Geflecht benetzenden Material hergestellt sind, so dass dadurch in einfacher Weise eine Klebeverbindung herstellbar ist.

Im einfachsten Fall ist dabei vorgesehen, dass das Material der Abdichtmateriallagen an dem Gewebe oder Geflecht selbstklebend haftet.

Alternativ dazu ist vorgesehen, dass das Material der Abdichtmateriallagen durch einen Haftvermittler mit dem Gewebe oder Geflecht verbunden wird.

Die Abdichtmateriallagen könnten beispielsweise aus einzelnen, auf das Gewebe oder Geflecht aufzulegenden Flächenstücken gebildet sein.

Eine vorteilhafte Lösung sieht jedoch vor, dass die Abdichtmateriallagen als Bereiche von beiderseits auf das Gewebe oder Geflecht auflegbaren Auflagezuschnitten ausgebildet werden.

Dabei sind die Auflagezuschnitte insbesondere so ausgebildet, dass sie mit mindestens einem Ausschnitt für den mindestens einen Siebbereich versehen werden und somit den mindestens einen Siebbereich vollständig umschließen.

Insbesondere ist vorgesehen, dass der mindestens eine Ausschnitt für den mindestens einen Siebbereich vor Auflegen des jeweiligen Auflagezuschnitts auf das Gewebe oder Geflecht hergestellt wird.

Im Fall, dass die Funktionslage mit einem Durchbruchsbereich versehen ist, ist vorzugsweise ebenfalls vorgesehen, dass die Auflagezuschnitte mit mindestens einem Ausschnitt für den mindestens einen Durchbruchbereich der Funktionslage versehen werden.

Für den Fall, dass die Funktionslage mit einem Durchlassbereich vorgesehen ist, ist vorzugsweise vorgesehen, dass die Auflagezuschnitte mit mindestens einem Ausschnitt für mindestens einen Durchlassbereich der Funktionslage versehen werden.

Insbesondere ist es für das Herstellen der Funktionslage von Vorteil, wenn die Auflagezuschnitte vor dem Auflegen auf das Gewebe oder Geflecht mit den Ausschnitten für den Durchbruchsbereich oder den Durchlassbereich versehen werden.

Besonders effizient lässt sich mit den erfindungsgemäß vorgesehenen Auflagezuschnitten arbeiten, wenn die Auflagezuschnitte im nicht formbaren Zustand des Materials der Abdichtmateriallagen mit den Ausschnitten versehen werden, da in diesem Fall ein einfaches Zuschneiden, beispielsweise durch Stanzverfahren erfolgen kann.

Eine besonders vorteilhafte Art der Herstellung der Auflagezuschnitte sieht vor, dass der jeweilige Auflagezuschnitt so zugeschnitten wird, dass die Abdichtmateriallagen für alle Abdichtbereiche der Funktionslage zusammenhängend miteinander verbunden sind.

Im Rahmen der erfindungsgemäßen Lösung ist es ferner besonders vorteilhaft, wenn die Abdichtmateriallagen als Teilbereiche von beiderseits auf einen Zuschnitt des Gewebes oder Geflechts insgesamt aufzulegenden Auflagezuschnitten gebildet werden, das heißt, dass die Funktionslage letztlich durch den Zuschnitt des Gewebes und die beiden auf diesen Zuschnitt des Gewebes aufzulegenden Auflagezuschnitte gebildet wird, die sämtliche Abdichtmateriallagen für diese Funktionslage aufweisen.

Vorzugsweise werden dabei die Auflagezuschnitte auch mit einer äußeren Zuschnittkontur versehen, die einer äußeren Zuschnittkontur des Zuschnitts des Gewebes oder Geflechts folgend verläuft.

Insbesondere ist es günstig, wenn die Zuschnittkontur der Auflagezuschnitte entsprechend der äußeren Zuschnittkontur des Zuschnitts des Gewebes oder Geflechts ausgebildet wird.

Insbesondere ist es für die Abdichteigenschaften im eingebauten Zustand des Funktionselements von Vorteil, wenn die Auflagezuschnitte im Einbauzustand des Funktionselements in einem nicht plastischen Zustand, jedoch elastisch deformierbar sind.

Vorzugsweise ist dabei vorgesehen, dass die Auflagezuschnitte im elastisch deformierten Zustand eine Shorehärte im Bereich von 40 Shore A bis 90 Shore A aufweisen.

Die eingangs genannte Aufgabe wird ferner dadurch gelöst durch ein Funktionselement, insbesondere für Flachdichtungen, bei welchem eine Funktionslage mindestens einen Siebbereich aufweist, in welchem zwischen Fäden eines Gewebes oder Geflechts Durchlassöffnungen zum Durchströmen für ein Fluid freiliegend sind, wobei erfindungsgemäß die Funktionslage einen zumindest den Siebbereich umschließenden Abdichtbereich aufweist, in welchem beiderseits des Gewebes oder Geflechts auf diesem Abdichtmateriallagen aufliegen, die zumindest bei einer flächenhaften Beaufschlagung von 5 MPa oder mehr mit dem Gewebe oder Geflecht einen querschnittsdichten Lagenverbund ausbilden.

Der Vorteil dieser Lösung ist ebenfalls darin zu sehen, dass damit in einfacher Weise die Möglichkeit besteht, einen querschnittsdichten Lagenverbund herzustellen.

Besonders günstig ist es dabei, wenn die Abdichtmateriallagen mit einer dem Gewebe oder Geflecht zugewandten Auflageseite versehen sind, deren Oberflächenstruktur an die Struktur des Gewebes oder Geflechts angepasst ist.

Vorzugsweise lässt sich eine Anpassung der Auflageseite an das Gewebe oder Geflecht dadurch herstellen, dass die Abdichtmateriallagen aus einem formbaren Material hergestellt sind und beiderseits auf dem Gewebe oder Geflecht aufliegen.

Für die Forderung des querschnittsdichten Lagenverbundes ist es besonders günstig, wenn das Material der Abdichtmateriallagen in das Gewebe oder Geflecht zumindest partiell eingepresst ist.

Ein derartiges formbares Material für die Abdichtmateriallagen ist beispielsweise ein Material entsprechend einem Thermoplast oder ein Material das chemisch zunächst in einem formbaren Zustand ist und dann von dem formbaren Zustand in einen nicht formbaren Zustand übergeht.

Eine besonders günstige Lösung sieht vor, dass die Abdichtmateriallagen aus einem Material hergestellt sind, das im Zuge einer Beaufschlagung mit einem Druck von 1 MPa oder mehr von dem formbaren in den nicht formbaren Zustand übergeht.

Zumindest in einem eingebauten Zustand ist dabei vorgesehen, dass das Material der Abdichtmateriallagen aus einem Material hergestellt ist, das nicht mehr in einem formbaren Zustand ist.

Vorteilhaft ist es dabei jedoch, wenn die Abdichtmateriallagen im nicht formbaren Zustand des Materials der Abdichtmateriallagen elastisch verformbar sind.

Durch diese elastische Verformbarkeit besteht die Möglichkeit, gegebenenfalls noch bestehende Hohlräume im Bereich um die Fäden des Gewebes oder Geflechts soweit zu reduzieren, dass ein querschnittsdichter Lagenverbund entsteht.

Besonders günstig ist es dabei, wenn die Abdichtmateriallagen im nicht formbaren Zustand des Materials der Abdichtmateriallagen höhenelastisch verformbar sind.

In diesem Fall besteht die Möglichkeit, die Abdichtmateriallagen auch gleichzeitig als Dichtelemente einzusetzen, um beispielsweise eine Abdichtung relativ zu starren Anlageflächen von Einheiten zu erreichen, zwischen denen das erfindungsgemäße Funktionselement abdichtend wirken soll.

Beispielsweise ist die elastische Verformbarkeit insbesondere dann von Vorteil, wenn die Abdichtmateriallagen im nicht formbaren Zustand mit dem Gewebe oder Geflecht ohne flächenhafte Beaufschlagung hohle Raumbereiche bilden.

Dies ist insbesondere dann der Fall, wenn im formbaren Zustand die Zähigkeit oder Viskosität des Materials der Abdichtmateriallagen so groß ist, das kein vollständiges Anlegen dieses Materials an die Fäden des Gewebes oder Geflechts erfolgt, sondern beispielsweise in Kreuzungsbereichen oder längs der Fäden hohle Raumbereiche oder Spalte verbleiben können.

Hinsichtlich der Verbindung zwischen den Abdichtmateriallagen und dem Gewebe oder Geflecht, insbesondere den Fäden des Gewebes oder Geflechts, wurden bislang keine näheren Angaben gemacht.

So sieht eine vorteilhafte Lösung vor, dass die Abdichtmateriallagen und das Gewebe oder Geflecht durch Haftung miteinander verbunden sind, das heißt, dass die Abdichtmateriallagen an dem Gewebe oder Geflecht haften und somit eine innige Verbindung mit dem Gewebe oder Geflecht eingehen.

Dies lässt sich beispielsweise dadurch realisieren, dass die Abdichtmateriallagen aus einem das Gewebe oder Geflecht benetzenden Material hergestellt sind.

Eine Lösung sieht dabei vor, dass das Material der Abdichtmateriallagen an dem Gewebe oder Geflecht selbstklebend haftet.

Alternativ dazu ist es aber auch denkbar, dass das Material der Abdichtmateriallagen durch einen Haftvermittler, beispielsweise einen Klebefilm, mit dem Gewebe oder Geflecht verbunden ist.

In jedem Fall wird jedoch eine Verbindung zwischen dem Gewebe oder Geflecht und den jeweiligen Abdichtmateriallagen hergestellt.

Hinsichtlich der Ausbildung der Abdichtmateriallagen wurden im Zusammenhang mit der bisherigen Erläuterung der einzelnen Ausführungsformen keine näheren Angaben gemacht.

So wäre es beispielsweise denkbar, die Abdichtmateriallagen aus mehreren einzelnen Flächenstücken zusammenzusetzen.

Eine zweckmäßige Lösung sieht jedoch vor, dass die Abdichtmateriallagen Bereiche von beiderseits auf dem Gewebe oder Geflecht aufliegenden Auflagezuschnitten sind, so dass die Abdichtmateriallagen insbesondere zusammenhängende Gebilde sind.

Vorzugsweise sind dabei die Auflagezuschnitte so ausgebildet, dass sie mit mindestens einem Ausschnitt für den mindestens einen Siebbereich versehen sind, so dass die jeweilige Abdichtmateriallage für den jeweiligen Siebbereich diesen insbesondere vollständig umschließt.

Darüber hinaus ist vorzugsweise ebenfalls vorgesehen, dass die Auflagezuschnitte mit mindestens einem Ausschnitt für mindestens ein Durchbruchsbereich versehen sind.

Ferner ist bei einer weiteren Ausführungsform zweckmäßigerweise vorgesehen, dass die Auflagezuschnitte mit mindestens einem Ausschnitt für mindestens einen Durchlassbereich der Funktionslage versehen sind.

Eine weitere vorteilhafte Lösung sieht vor, dass die Auflagezuschnitte so zugeschnitten sind, dass die Abdichtmateriallagen für alle Abdichtbereiche der Funktionslage zusammenhängend miteinander verbunden sind, so dass durch das Auflegen eines Auflagenzuschnitts sämtliche Abdichtmateriallagen auf die jeweilige Seite des Gewebes oder Geflechts aufgelegt und somit in exakter Ausrichtung zueinander auf dem Gewebe oder Geflecht positioniert sind.

Eine weitere vorteilhafte Lösung sieht vor, dass die Abdichtmateriallagen als Teilbereiche von beiderseits auf einen Zuschnitt des Gewebes oder Geflechts insgesamt aufzulegenden Auflagezuschnitten gebildet sind, so dass in diesem Fall sämtliche Abdichtmateriallagen durch das Auflegen der Auflagenzuschnitte auf einen Zuschnitt des Gewebes oder Geflechts aufgebracht werden können.

Besonders günstig ist es dabei, wenn die Auflagenzuschnitte eine äußere Zuschnittkontur aufweisen, die einer äußeren Zuschnittkontur des Gewebes oder Geflechts folgend verläuft.

Insbesondere ist es von Vorteil, wenn die äußere Zuschnittskontur der Auflagenzuschnitte entsprechend der äußeren Zuschnittskontur des Gewebes oder Geflechts ausgebildet ist.

Beispielsweise ist bei einer vorteilhaften erfindungsgemäßen Lösung vorgesehen, dass die Auflagezuschnitte im Einbauzustand des Funktionselements in einem nicht plastisch formbaren Zustand, jedoch elastisch deformierbar sind, um dadurch beispielsweise in einfacher Art und Weise eine Abdichtung von an dem Funktionselement anlegbaren Elementen zu erhalten.

Eine besonders vorteilhafte Lösung sieht dabei vor, dass die Auflagezuschnitte im elastisch deformierbaren Zustand eine Shorehärte im Bereich von 40 Shore A bis 90 Shore A aufweisen.

Hinsichtlich der Ausbildung der Fäden selbst wurden bislang keine näheren Angaben gemacht.

So sieht eine vorteilhafte Lösung vor, dass die Fäden eine Fadendicke von maximal 300 µm aufweisen, besser ist es, wenn die Fäden eine Fadendicke von maximal 200 µm, noch besser eine Fadendicke von maximal 100 µm, und besonders bevorzugt eine Fadendicke von maximal 50 µm, aufweisen, um ein sehr feines Gewebe oder Geflecht einsetzen zu können.

Die Fäden können dabei beispielsweise Metallfäden sein, insbesondere wäre es denkbar, als Fäden Edelstahlfäden einzusetzen.

Eine andere vorteilhafte Lösung sieht jedoch vor, dass das Gewebe oder Geflecht aus Kunststofffäden gebildet wird.

Derartige Kunststofffäden können aus unterschiedlichsten Materialien ausgebildet sein.

Eine besonders zweckmäßige Lösung sieht vor, dass das Gewebe oder Geflecht Fäden aus Thermoplastmaterial aufweist, wobei das Thermoplastmaterial der Fäden als Füllmaterial zum Verschließen der Durchlassöffnung thermisch erweicht und verpresst wird.

In diesem Fall kann somit das Material teilweise oder ganz durch den erweichten Anteil des Materials der Fäden zum Verschließen der Durchlassöffnungen eingesetzt werden.

Bei einer anderen Lösung, bei welcher insbesondere das Gewebe oder Geflecht eine stabile Basis für den Abdichtbereich bildet, ist vorzugsweise vorgesehen, dass die Funktionslage durch ein Gewebe oder Geflecht aus Fäden gebildet wird, deren Schmelzpunkt soweit über dem Schmelzpunkt des auf dieses aufgetragenen Thermoplastmaterials der Abdichtmateriallagen liegt, das bei einem Erweichen des aufgetragenen Thermoplastmaterials kein Erweichen der Fäden erfolgt.

In diesem Fall bleiben somit die Fäden auch beim Erweichen des Materials der Abdichtmateriallagen undeformiert und behalten ihre mechanischen Eigenschaften bei, um somit eine stabile Basis für den Abdichtbereich und den Übergang zwischen dem Abdichtbereich und dem Siebbereich zu haben, so dass keinerlei Fadenbrüche oder andere Brucherscheinungen am Übergang vom Siebbereich zum Abdichtbereich auftreten.

Hinsichtlich der weiteren Ausbildung des Funktionselements wurden bislang keine näheren Angaben gemacht.

Prinzipiell kann ein derartiges Funktionselement mit den bislang definierten Merkmalen als Flachdichtung eingesetzt werden.

Alternativ dazu ist es für den Einsatz eines erfindungsgemäßen Funktionselements als Flachdichtung vorteilhaft, wenn auf mindestens einer der Dichtoberflächen ein Abdichtelement vorgesehen wird.

Ein derartiges Abdichtelement dient dazu, als insbesondere höhenelastisch wirkendes Element eine Abdichtung zu einer Anlagefläche einer Baugruppe herzustellen, wobei ein derartiges höhenelastisches Abdichtelement insbesondere dazu dient, einen Spalt zwischen der Dichtoberfläche und der Anlagefläche der Baugruppe, insbesondere dann, wenn dieser über seine Spaltausdehnung variiert, zu überbrücken und somit zu verschließen.

Aus diesem Grund ist beispielsweise vorgesehen, dass mindestens einer der Abdichtbereiche mit einem Abdichtelement aus Elastomermaterial vorgesehen wird.

Ein derartiges Elastomermaterial schafft in üblicher Weise die Möglichkeit, den Spalt zwischen der Dichtoberfläche und einer Anlagefläche der Baugruppe elastisch zu überbrücken.

Eine derartige Elastomerschicht kann beispielsweise nachträglich nach Ausbildung der Dichtoberflächen aufgetragen werden.

Eine hinsichtlich der Herstellung besonders vorteilhafte Lösung sieht vor, dass das Abdichtelement aus Elastomermaterial zusammen mit der Abdichtmateriallage auf das Gewebe oder Geflecht aufgelegt wird, wobei insbesondere in diesem Fall vorgesehen ist, dass beim Erweichen der Abdichtmateriallage die Elastomerschicht keine Formveränderung erfährt, so dass die Elastomerschicht dann, wenn das Füllmaterial in das Gewebe oder Geflecht eingepresst ist, unverändert vorhanden ist.

Vorzugsweise ist die Elastomerschicht aus einem Duromer gebildet und somit thermisch nicht erweichbar.

Eine andere vorteilhafte Lösung sieht vor, dass auf der mindestens einen Dichtoberfläche als Abdichtelement mindestens eine Lage aus einem metallischen Flachmaterial vorgesehen wird.

Vorzugsweise ist dabei vorgesehen, dass die mindestens eine Lage aus metallischem Flachmaterial mit mindestens einem Dichtelement versehen wird, wobei ein derartiges Dichtelement beispielsweise als Elastomerauflage oder Sicke ausgebildet sein kann.

Ähnliche Funktionselemente sind auch aus US 2014/0090343 A, WO 2012/136384 A, und DE 10 2007 019 946 A bekannt. Weitere Merkmale und Vorteile der erfindungsgemäßen Lösung sind Gegen-stand der nachfolgenden Beschreibung sowie der zeichnerischen Darstellung einiger Ausführungsbeispiele.

In der Zeichnung zeigen:
- Fig. 1: eine perspektivische Darstellung eines ersten Ausführungsbeispiels eines erfindungsgemäßen Funktionselements;
- Fig. 2: einen Schnitt längs Linie 2-2 in Fig. 1;
- Fig. 3: eine Explosionsdarstellung einer Herstellung des ersten Ausführungsbeispiels des erfindungsgemäßen Funktionselements;
- Fig. 4: einen Schnitt durch einen Lagenverbund gemäß Fig. 2 im Bereich von Kreuzungsstellen der Fäden des Gewebes oder Geflechts bei im nicht formbaren Zustand befindlichem Material der Abdichtmateriallagen jedoch ohne Druckbeaufschlagung der Abdichtmateriallagen;
- Fig. 5: einen Schnitt ähnlich Fig. 4 im selben Zustand gemäß Fig. 4 durch die Fäden des Gewebes oder Geflechts außerhalb der Kreuzungsstellen;
- Fig. 6: einen Schnitt ähnlich Fig. 4 bei Druckbeaufschlagung der Abdichtmateriallagen zur Herstellung des querschnittsdichten Lagenverbunds im Bereich der Kreuzungsstellen der Fäden;
- Fig. 7: einen Schnitt ähnlich Fig. 5 jedoch ebenfalls bei Druckbeaufschlagung der Abdichtmateriallagen zur Herstellung des querschnittsdichten Lagenverbunds im Bereich der Fäden;
- Fig. 8: einen Querschnitt durch einen Handhabungsverbund für eine Abdichtmateriallage vor Aufbringen derselben auf das Gewebe oder Geflecht;
- Fig. 9: einen Schnitt ähnlich Fig. 8 durch einen weiteren Handhabungsverbund für eine Abdichtmateriallage vor Aufbringen derselben;

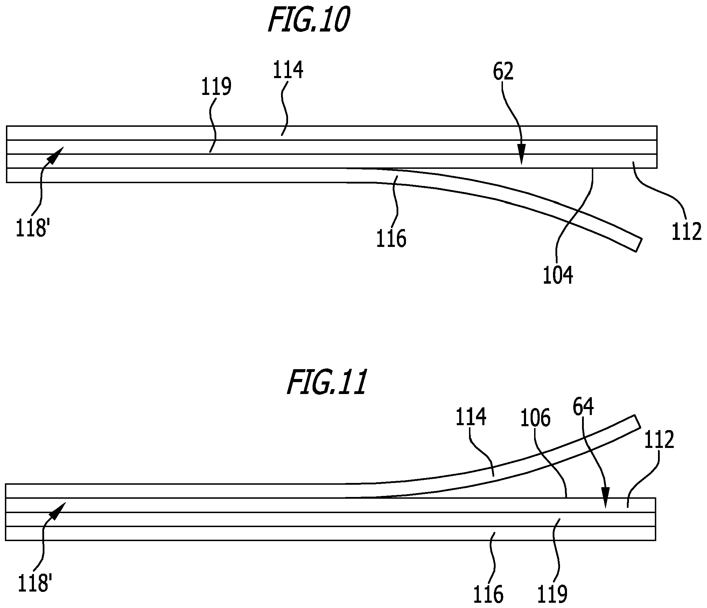

- Fig. 10: einen Schnitt durch ein weiteres Ausführungsbeispiel eines Handhabungsverbunds für eine Abdichtmateriallage ähnlich Fig. 8;
- Fig. 11: einen Schnitt durch ein weiteres Ausführungsbeispiel eines Handhabungsverbunds gemäß Fig. 10;
- Fig. 12: eine Darstellung einer Steuereinheit mit einer Zwischenplatte umfassend ein erfindungsgemäßes Funktionselement;
- Fig. 13: einen Schnitt durch eine erste Ausführungsform der Zwischenplatte gemäß Fig. 12, gebildet aus einem Funktionselement gemäß dem ersten Ausführungsbeispiel und
- Fig. 14: einen Schnitt durch eine zweite Ausführungsform der Zwischenplatte gemäß Fig. 12 mit in dieser integriertem erfindungsgemäßem Funktionselement gemäß dem dritten Ausführungsbeispiel.

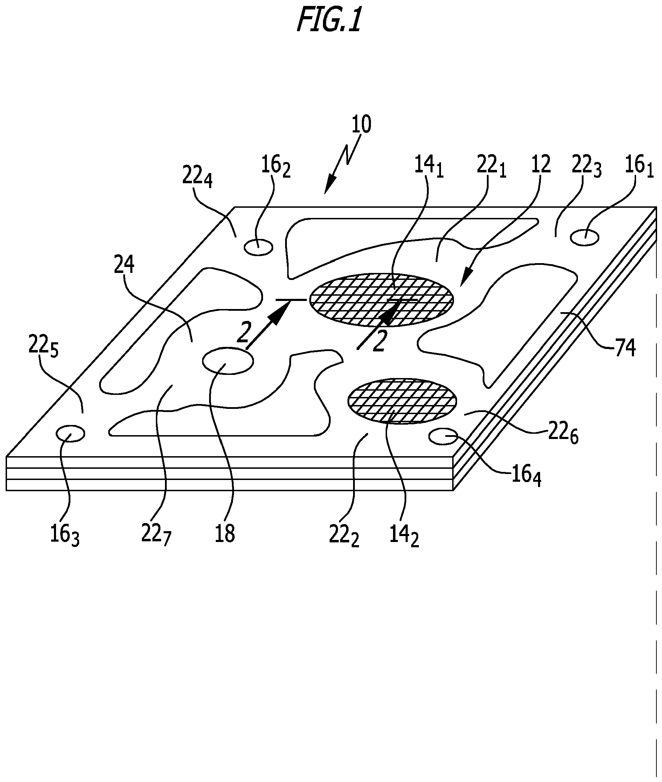

Ein in Fig. 1 dargestelltes und als Ganzes mit 10 bezeichnetes Funktionselement, insbesondere für Flachdichtungen, umfasst eine als Ganzes mit 12 bezeichnete Funktionslage, welche beispielsweise Siebbereiche 14₁, 14₂ aufweist, mittels welchen ein Filtern eines durch die Funktionslage 12 hindurchtretenden Fluids erfolgen soll.

Beispielsweise kann die Funktionslage 12 zusätzlich zu den Siebbereichen 14 noch Durchbruchsbereiche 16₁, 16₂, 16₃ und 16₄ aufweisen, durch welche beispielsweise eine mechanische Verbindung zweier Einheiten erfolgen kann, zwischen denen das erfindungsgemäße Funktionselement 10 angeordnet ist und zwischen denen beispielsweise ein Fluidaustausch durch die Siebbereiche 14₁ bzw. 14₂ hindurch erfolgen soll.

Ferner umfasst ein derartiges Funktionselement 10 beispielsweise noch einen oder mehrere Durchlässe 18, durch welche ein Fluid hindurchtreten kann, wobei in diesem Fall das Fluid kein Filter oder Sieb durchsetzt, sondern ungehindert durch einen freien Querschnitt des jeweiligen Durchlasses 18 hindurchströmen kann.

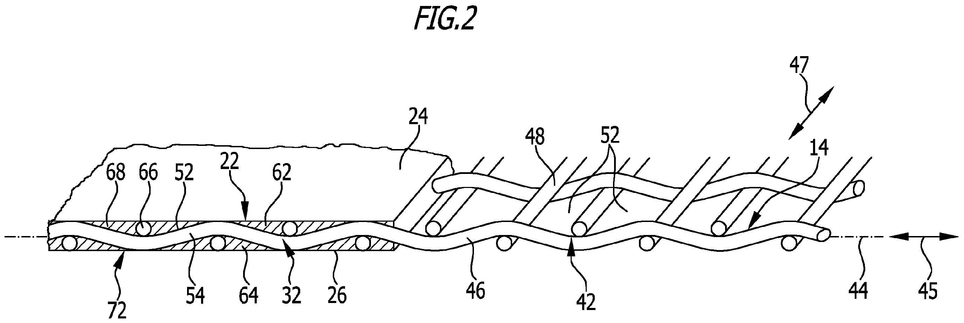

Zur Abdichtung um die Siebbereiche 14, die Durchbruchsbereiche 16 und um den mindestens einen oder mehrere Durchlassbereiche 18 sind diese umschließende Abdichtbereiche 22₁ bis 22₇ vorgesehen, die um die Siebbereiche 14, die Durchlassbereiche 18 und die Durchbruchsbereiche 16 herum eine Abdichtung zwischen einander gegenüberliegenden Dichtoberflächen 24 und 26 der Funktionslage 12 bewirken, wie in Fig. 2 dargestellt, wobei in einem derartigen Abdichtbereich 22 ein Lagenverbund 32 vorliegt, der ein Gewebe oder Geflecht 42 umfasst, welches sich in einer Fläche 44 erstreckt und in einer ersten zur Fläche 44 parallelen Richtung 45 sich erstreckende Fäden 46 sowie quer zu diesen Fäden 46 sich in einer zweiten zur Fläche 44 parallelen Richtung 47 erstreckende Fäden 48 aufweist, zwischen denen Durchlassöffnungen 52 vorliegen, durch die in dem jeweiligen Siebbereich 14 das Fluid hindurchströmen kann, wobei durch die Größe der Durchlassöffnungen 52 die Sieb- oder Filterwirkung festgelegt ist.

Außerhalb der Siebbereiche 14 bildet das Gewebe oder Geflecht 42 eine Grundstruktur 54 der Funktionslage 12, auf welcher zumindest in den Abdichtbereichen 22 Abdichtmateriallagen 62 und 64 aufliegen die zusammen mit der Grundstruktur 54 in den Abdichtbereichen 22 den querschnittsdichten Lagenverbund 32 bilden, insbesondere zumindest dann, wenn die Dichtoberflächen 24, 26 flächenhaft mit einem Druck von 5 MPa oder mehr beaufschlagt sind.

In diesem Fall legen sich die Abdichtmateriallagen 62 und 64 derart an der durch das Gewebe oder Geflecht 42 gebildeten Grundstruktur 54 an, dass sich an den in den Abdichtbereichen 22 liegenden Kreuzungsstellen 66 der Fäden 46 und 48 sowie an den seitlich neben den Durchlassöffnungen 52 liegenden Raumbereichen 68 die Abdichtmateriallagen 62 und 64 an den Fäden 44 und 46 des Gewebes oder Geflechts 42 weitgehend anliegen, wobei die Abdichtmateriallagen 62 und 64 insbesondere den Raum zwischen den Dichtoberflächen 24 und 26 im Wesentlichen frei von Hohlräumen ausfüllen.

Unter dem Begriff querschnittsdicht ist dabei zu verstehen, dass ein Gasdurchsatz durch einen einen Siebbereich 14 oder einen Durchbruchsbereich 16 oder einen Durchlassbereich 18 umgebenden Abdichtbereich bei einem Druck von 1bar kleiner als 5ml/Min ist.

Insbesondere sind die Dichtoberflächen 24 und 26 quer zu ihrer Flächenausdehnung im Abstand voneinander angeordnet, der vorzugsweise mindestens der Summe aus der Dicke eines Fadens 46 und der Dicke eines Fadens 48 entspricht, da diese an den Kreuzungsstellen 66 übereinanderliegen und somit den Mindestabstand der Dichtoberflächen 24, 26 festlegen, wenn keine Deformation der Fäden 46, 48 erfolgen soll.

Damit ergibt sich, zumindest in dem jeweiligen Abdichtbereich 22 eine formstabile Struktur 72, ähnlich einem Faserverbundwerkstoff.

Diese formstabile Struktur 72 stabilisiert nicht nur die von dieser umgebenen Siebbereiche 14 oder Durchbruchsbereiche 16 oder Durchlassbereiche 18, sondern auch das Gewebe oder Geflecht 42 insgesamt, so dass beispielsweise eine derartige formstabile Struktur 72 in allen Bereichen des Funktionselements 10 außerhalb der Siebbereiche 14 und der Durchbruchsbereiche 16 oder Durchlassbereiche 18 vorgesehen ist.

Insbesondere ist es auch vorteilhaft, eine derartige formstabile Struktur 72 nahe den äußeren Randbereichen der Funktionslage 12 vorzusehen, um dadurch die Funktionslage 12 mit dem formstabilen Randbereich 74 zu versehen, der diese als Ganzes umgibt und somit die gesamte Formstabilität der Funktionslage 12 unterstützt.

Hinsichtlich der Ausbildung der Dichtoberflächen 24, 26 wurden bislang keine näheren Angaben gemacht.

Beispielsweise können die Dichtoberflächen 24 und 26 mit einer für eine unmittelbare Abdichtung geeigneten geringen Oberflächenrauigkeit versehen werden, die weniger als 10 µm beträgt.

Andererseits ist es aber auch denkbar, die Dichtoberflächen 24, 26 zusätzlich noch mit zusätzlichen Dichtelementen, beispielsweise Dichtlagen aus Sickenblechen, zu versehen.

Um jedoch die Dichtoberflächen 24, 26 derart auszubilden, dass diese sich für eine direkte Abdichtung eignen, sind die Abdichtmateriallagen 62, 64 derart auszubilden, dass diese eine ausreichende Formstabilität aufweisen, das heißt, dass die Abdichtmateriallagen 62, 64, dann, wenn das Funktionselement 10 abdichtend an Gegenflächen anliegen soll, in der Lage sind, ausreichend große Flächenpressungen, beispielsweise im Bereich von mehr als 1 MPa bis zu 50 MPa, dauerhaft aufzunehmen ohne diesen Flächenpressungen durch ein Kriechen oder Fließen auszuweichen.

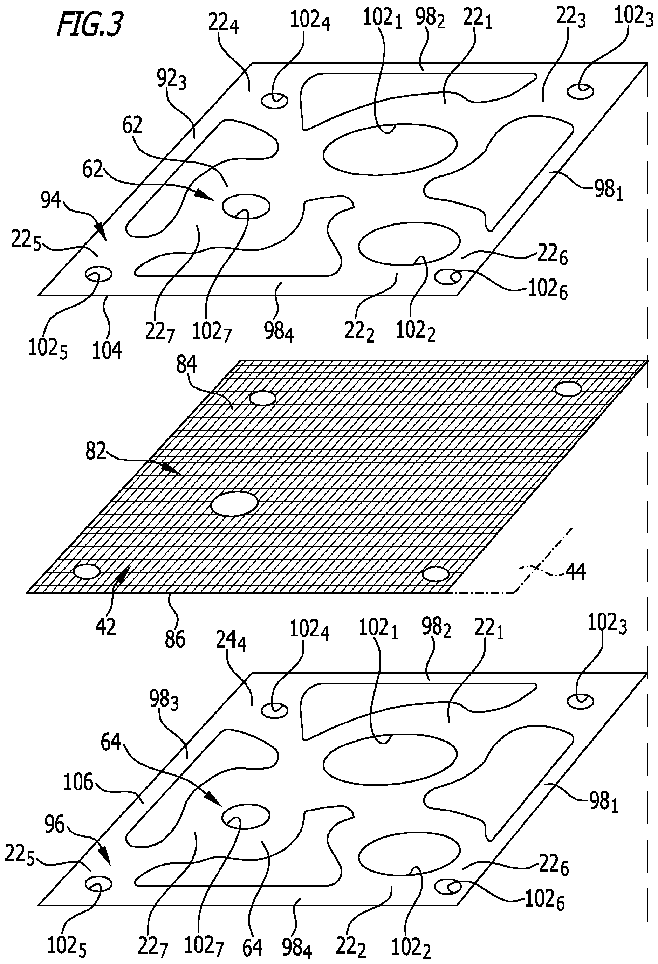

Die Herstellung einer erfindungsgemäßen Funktionslage 12 erfolgt, wie in Fig. 3 dargestellt, beispielsweise dadurch, dass auf einen Zuschnitt 82 des Gewebes oder Geflechts 42, der sich in der Fläche 44 erstreckt, auf eine erste Seite 84 und eine zweite Seite 86 jeweils ein Auflagezuschnitt 94 bzw. 96 umfassend die jeweiligen Abdichtmateriallagen 64, 66 aufgelegt wird, wobei der Auflagezuschnitt 94 mit einer Auflageseite 104 der Abdichtmateriallagen 62 auf der ersten Seite 84 des Zuschnitts 82 aufgelegt wird und der Auflagezuschnitt 96 mit seiner Auflageseite 106 der Abdichtmateriallagen 64 auf die zweite Seite 86 des Zuschnitts 82 des Gewebes oder Geflechts 42 aufgelegt wird.

Dabei umfasst jeder der Auflagezuschnitte 94 bzw. 96 die jeweiligen Abdichtmateriallagen 62, 64, die beispielsweise in dem jeweiligen Auflagezuschnitt 94 bzw. 96 zusammenhängend ausgebildet sind und beispielsweise noch mit die jeweiligen Auflagezuschnitte 94 bzw. 96 längs ihrer Außenkontur umfassenden Randbereichen 98₁ bis 98₄ verbunden sind.

Insbesondere lassen sich die Auflagezuschnitte 94 bzw. 96 durch Ausstanzen aus einer einheitlichen Materiallage herstellen lassen, wobei durch das Ausstanzen beispielweise die Siebbereiche umschließende Zuschnittskonturen 102₁ und 102₂ sowie beispielsweise auch die Durchbrüche 16 umschließende Zuschnittskonturen 102₃ bis 102₆ sowie eine beispielsweise den Durchlassbereich 18 umschließende Zuschnittskontur 102₇ in den jeweiligen Auflagezuschnitten 94 bzw. 96 entstehen.

Somit entsteht beim Auflegen der Auflagezuschnitte 94 bzw. 96 auf den Zuschnitt 82 des Gewebes oder Geflechts 42 bereits im Bereich der Abdichtmateriallagen 62 bzw. 64 eine Vorstufe für den späteren querschnittsdichten Lagenverbund 32 in den Abdichtbereichen 22₁ bis 22₇, wobei durch das bloße Auflegen der Abdichtmateriallagen 62 und 64 auf die entsprechenden Bereiche des Gewebes oder Geflechts 42 noch kein querschnittsdichter Lagenverbund entsteht, da die Auflageseiten 104 und 106 der Auflagezuschnitte 94 bzw. 96 noch keine Anpassung an das Gewebe oder Geflecht 42 in den jeweiligen Bereichen erfahren haben.

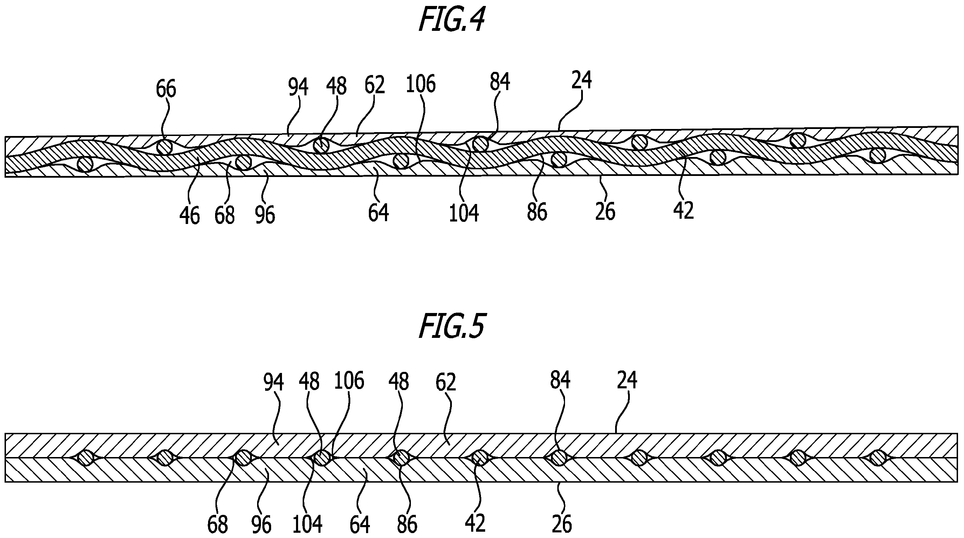

Wie in Fig. 4 und Fig. 5 dargestellt, erfolgt eine Anpassung der Auflageseiten 104 und 106 der Abdichtmateriallagen 62, 64 an die erste Seite 84 bzw. die zweite Seite 86 des Gewebes oder Geflechts 42 dadurch, dass in einem formbaren Zustand des Materials der Abdichtmateriallagen 62 und 64 der Auflagezuschnitte 94 und 96 eine Einwirkung auf die Dichtoberflächen 24 und 26 durch eine flächenhafte Presskraft erfolgt, die dazu führt, dass dann, wenn das Material der Abdichtmateriallagen 62 und 64 in dem formbaren Zustand ist, sich die die Auflageseiten 104 und 106 an die Form des Gewebes 42 passen, indem sich die Abdichtmateriallagen 62, 64 durch plastische Verformung zumindest teilweise um die Fäden 46 bzw. 48 des Geflechts 42 herumlegen.

Diese Anpassung ist, wie in Fig. 4 und 5 dargestellt, keine vollständige Anpassung, so dass insbesondere an den Kreuzungsstellen 66 sowie auch in Längsrichtung an den einzelnen Fäden 46, 48 noch hohle Raumbereiche 68 durch noch nicht geschlossene Hohlräume verbleiben.

Solange in nennenswertem Umfang noch hohle Raumbereiche 68 im Bereich der Fäden 46, 48 und insbesondere im Bereich der Kreuzungsstellen 66 existieren, mangelt es an der erforderlichen Querschnittsdichtigkeit des Lagenverbundes 32.

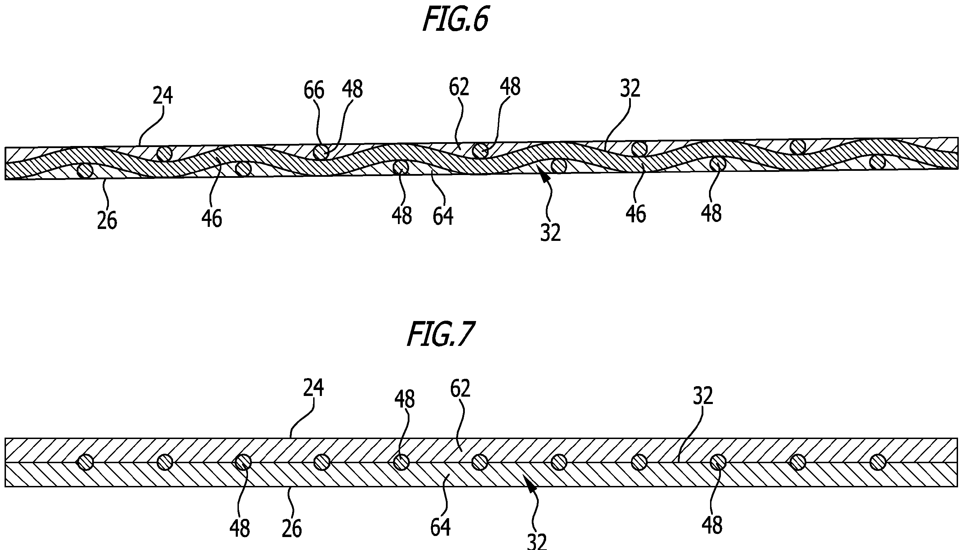

Die Querschnittsdichtigkeit des Lagenverbundes 32 ist erst dann erreicht, wenn der Lagenverbund 32 wie in Fig. 6 und 7 dargestellt, so gestaltet ist, dass die Abdichtmateriallagen 62, 64 die Fäden 46, 48 derart umschließen, dass keine nennenswerten hohle Raumbereiche 86 längs der Fäden 46, 48, insbesondere im Bereich der Kreuzungsstellen 66 derselben, mehr existieren, sondern sich das Material der Dichtmateriallagen 62 und 64 weitgehend um die Fäden 46, 48 herum an diese angelegt hat.

Ein derart querschnittsdichter Lagenverbund 32 ist im Rahmen der erfindungsgemäßen Lösung auf unterschiedlichste Art und Weise zu erreichen.

Wie im Zusammenhang mit Fig. 4 und 5 dargestellt, lässt sich zunächst eine Anpassung der Auflageseiten 104 und 106 an die Seiten 84 und 86 des Geflechts 42 in dem formbaren Zustand des Materials der jeweiligen Abdichtmateriallage 62, 64 erreichen.

Es besteht die Möglichkeit, den formbaren Zustand weiter aufrecht zu erhalten, um den in Fig. 6 und Fig. 7 dargestellten querschnittsdichten Zustand des Lagenverbunds 32 zu erreichen, wobei dies einen formbaren Zustand des Materials der Abdichtmateriallagen 62, 64 mit geringer Viskosität erfordert, beispielsweise im Wertebereich von 30 Mooney-Viskosität bis 120 Mooney-Viskosität.

Insbesondere lässt sich in der Regel aufgrund der Viskosität des Materials der Abdichtmateriallagen 62, 64 im formbaren Zustand lediglich eine Anpassung der Auflageflächen 104, 106 an die Seiten 84, 86 des Gewebes 42 in derart erreichen, wie sie in Fig. 4 und Fig. 5 dargestellt ist, so dass nach wie vor noch die Hohlräume 68 längs der Fäden 46, 48 des Geflechts 42 vorliegen.

Wird nach einer derartigen Anpassung der Auflageseiten 104 und 106 an die Fäden 46, 48 des Gewebes oder Geflechts der formbare Zustand verlassen, so ist es erforderlich, dass die Abdichtmateriallagen 62, 64 auch im nicht formbaren Zustand elastisch sind, so dass ein dauerhaftes Beaufschlagen der Abdichtmateriallagen 62, 64 im Bereich ihrer Dichtoberflächen 24, 26 zu einer elastischen Deformation der Abdichtmateriallagen dergestalt führt, dass der querschnittsdichte Zustand des jeweiligen Lagenverbunds 32 gemäß Fig. 6 und Fig. 7 durch diese dauerhafte Beaufschlagung der Abdichtmateriallagen 62, 64 erreicht und aufrechterhalten werden kann.

Eine derartige flächenhafte Beaufschlagung der Dichtoberflächen 24, 26 liegt dabei im Bereich zwischen 1 MPa und 50 MPa, die beim Einbau einer derartigen Funktionslage 12 zur Abdichtung zwischen zwei Einheiten dauerhaft vorliegen.

Als Material für die Abdichtmateriallagen 62, 64 welches in einen formbaren Zustand versetzbar ist und welches nachfolgend in einen nicht mehr formbaren, jedoch elastischen Zustand versetzbar ist, ist beispielsweise ein Thermoplastmaterial vorgesehen, welches bei ausreichend starker Erwärmung in den formbaren Zustand übergeht und bei nachfolgender Abkühlung in den nicht mehr formbaren, jedoch nach wie vor elastischen Zustand übergeht.

Derartige Materialien sind beispielsweise thermoplastische Elastomere, insbesondere auf Polyurethanbasis, die zum Beispiel im formbaren Zustand nicht vernetzt sind und im nicht formbaren Zustand vernetzt sind.

Folglich wird in dem formbaren Zustand des Materials der Abdichtmateriallagen 62, 64 die Anpassung der Auflageseiten 104, 106 an die Fäden 46, 48 des Gewebes 42 durchgeführt, so dass ein Zustand erreichbar ist, in welchem sich die Abdichtmateriallagen 62, 64 teilweise um die Fäden 46, 48 herumlegen, jedoch nach wie vor hohle Raumbereiche 68 existieren, die aufgrund der hohen Viskosität des Thermoplastmaterials im formbaren Zustand nicht vollständig durch Verpressen aufgelöst werden können.

Durch nachfolgendes Abkühlen gehen die Abdichtmateriallagen 62, 64 aus dem Thermoplastmaterial dann in den nicht mehr formbaren, jedoch elastischen Zustand über.

Wird die erfindungsgemäße Funktionslage 12 in dem nicht mehr formbaren, jedoch elastischen Zustand der Abdichtmateriallagen 62, 64 zwischen den abzudichtenden Elementen verbaut, so besteht aufgrund der beim Verbau dieser Funktionslage 12 zwischen den jeweiligen Elementen auftretenden Flächenpressungen die Möglichkeit, den Lagenverbund 32 in den Abdichtbereichen 22 querschnittsdicht zu gestalten, in dem durch elastische Verformung des Materials der Abdichtmateriallagen 62, 64 die hohlen Raumbereiche 68 so weit verringert werden, dass ein querschnittsdichter Zustand des Lageverbundes 32 entsteht.

Dieser querschnittsdichte Zustand bleibt dann auch so lange erhalten, so lange die Kraftbeaufschlagung der Funktionslage 12 über die Dichtoberflächen 24, 26 erhalten bleibt.

Da die die Dichtoberflächen 24, 26 tragenden Abdichtmateriallagen 62, 64 selbst elastisch sind, können die Abdichtmateriallagen ihrerseits auch gleichzeitig als Dichtelemente wirken, wenn die Dichtoberflächen 24, 26 an entsprechend starre Oberflächen der abzudichtenden Elemente angelegt werden und mit diesen aufgrund ihrer Elastizität dichtend abschließen.

Derartige Thermoplastmaterialien sind dabei entweder so ausgebildet, dass sie selbst die Fäden 46, 48 des Gewebes oder Geflechts 42 benetzen oder die Auflageseiten 104 und 106 sind mit einem die Haftung an den Fäden 46, 48 des Gewebes oder Geflechts 42 bewirkenden Film eines Haftvermittlers versehen.

Bei einem weiteren Ausführungsbeispiel der erfindungsgemäßen Lösung wäre es auch denkbar, ein Material der Abdichtmateriallagen 62, 64 vorzusehen, welches sich durch chemische Behandlung, beispielweise mit einem Lösungsmittel, in einen formbaren Zustand bringen lässt, so dass zumindest eine Anpassung der Auflageseiten 104, 106 an die Fäden 46, 48 des Gewebes 42 erfolgen kann, wie sie in Fig. 4 und Fig. 5 dargestellt ist.

Auch in diesem Fall ist nicht immer eine derartige Formbarkeit gegeben, dass der Zustand gemäß Fig. 6 und Fig. 7, in welchem die hohlen Raumbereiche 68 weitgehend aufgelöst sind, erreichbar ist, sondern es ist in der Regel ebenfalls nur ein Zustand des Lagenverbunds 32 gemäß Fig. 4 und Fig. 5 erreichbar, in dem nach wie vor noch hohle Raumbereiche 68 existieren, so dass der Lagenverbund 32 keine ausreichende Querschnittsdichtigkeit aufweist.

Auch bei diesem Ausführungsbeispiel ist nach dem Übergang des Materials in den nicht formbaren Zustand das Material der Abdichtmateriallagen 62, 64 nach wie vor elastisch, so dass durch flächige Druckbeaufschlagung der Dichtoberflächen 24, 26 eine derartige elastische Verformung der Abdichtmateriallagen 62, 64 erreichbar ist, dass die hohlen Raumbereiche 68 so gering werden, so dass der Lagenverbund 32 querschnittsdicht ist, und folglich beim Einbau einer derartigen Funktionslage 12 zwischen zwei Einheiten ebenfalls die erforderliche Querschnittsdichtigkeit erreichbar ist.

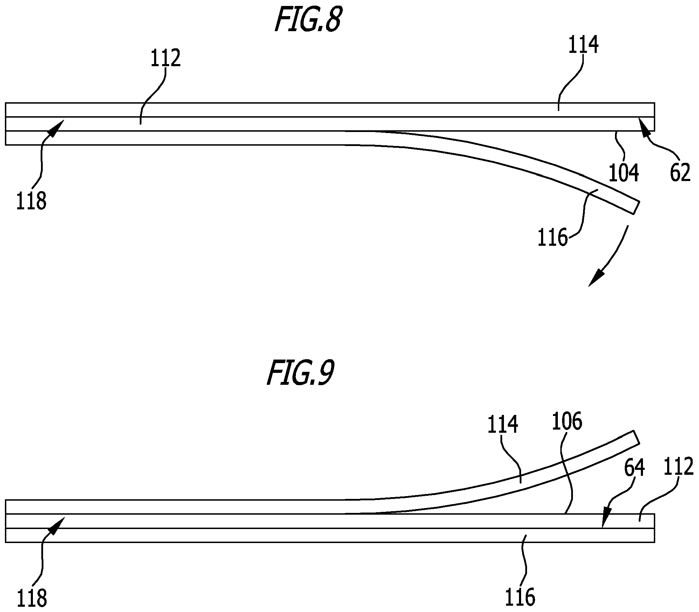

Bei einem dritten Ausführungsbeispiel einer erfindungsgemäßen Lösung ist das Material der Abdichtmateriallagen 62, 64, wie in Fig. 8 anhand der Abdichtmateriallage 62 dargestellt, eine Schicht 112 aus einem klebenden und insbesondere bei einer Druckbeaufschlagung aushärtendem Material, welche zwischen zwei Abdecklagen 114, 116 angeordnet ist, wobei die Schicht 112 zwischen den Abdecklagen 114 und 116 einen Handhabungsverbund 118 bildet, aus welchem beispielsweise die Auflagezuschnitte 94, 96 herstellbar sind.

Zum Auflegen der Schicht 112 als Abdichtmateriallage 62, 64 auf das Gewebe 42 wird beispielsweise zunächst die Abdecklage 116, wie in Fig. 8 dargestellt, abgezogen, so dass die Auflageseite 104 der die Abdichtmateriallage 62 bildenden Schicht 112 freiliegt und auf die erste Seite 84 des Gewebes oder Geflechts 42 aufgelegt werden kann.

In analoger Weise wird bei der Abdichtmateriallage 64, welche ebenfalls durch die Schicht 112 zwischen zwei Abdecklagen 114 und 116 gebildet ist (Fig. 9), nach Herstellung des Auflagezuschnitts 96 die Abdecklage 114 abgezogen, so dass in diesem Fall dann die Auflageseite 106 der Abdichtmateriallage 64 auf die zweite Seite 86 des Gewebes oder Geflechts 42 aufgelegt werden kann.

Dadurch, dass die Schichten 112, welche die Abdichtmateriallagen 62 und 64 bilden, Klebstoffschichten sind, weisen diese eine Viskosität entsprechend einer zähflüssigen Masse auf, wobei die Schichten 112 in einem formbaren Zustand sind.

Es besteht nun entweder die Möglichkeit, bei der Abdichtmateriallage 62 die Abdecklage 114 zu belassen und auf der Schicht 112 der Abdichtmateriallage 64 die Abdecklage 116 zu belassen und über diese Abdecklagen 114 bzw. 116 die die Abdichtmateriallagen 62, 64 bildenden Schichten 112 mit einer flächenhaften Kraft zu beaufschlagen, so dass die im formbaren Zustand befindlichen Schichten 112 der Abdichtmateriallagen 62, 64 mit ihren Auflageseiten 104, 106 sich an die Fäden 46, 48 des Gewebes oder Geflechts 42 hinsichtlich ihrer Form anpassen und/oder anlegen, um zumindest einen Zustand zu erreichen, wie er in Fig. 4 und 5 dargestellt ist, wobei nach wie vor hohle Raumbereiche 68 längs der Fäden 46, 48 existieren, welche der erforderliche Querschnittsdichtigkeit des Lagenverbundes 32 entgegenstehen.

Bei dieser Deformation der die Abdichtmateriallagen 62, 64 bildenden Schichten 112 hat das diese Schicht 112 bildende Material jedoch die Möglichkeit, sich durch eine Erwärmung und/oder den Druck zu verfestigen, insbesondere zu vernetzen, und von dem anfänglich plastisch formbaren in einen plastisch nicht mehr formbaren, jedoch elastisch deformierbaren Zustand überzugehen.

Bei einer weiteren und ständigen Beaufschlagung der Abdichtmateriallagen 62, 64 erfolgt aufgrund des bestehenden elastischen Verhaltens derselben dann noch ein derartiges Reduzieren der hohlen Raumbereiche 68, so dass der Lagenverband 32 die erforderliche Querschnittsdichtigkeit aufweist.

Ein Beispiel für ein derartiges Material, welches eine derartige Eigenschaften aufweisende Schicht 112 umfasst, ist beispielsweise ein "pressure sensitive adhesive" der Firmen Tesa, oder 3M oder Lohmann.

Ein derartiges Material hat den Vorteil, dass diese an den Fäden 46, 48, des Gewebes oder Geflechts unmittelbar haftet, so dass beispielsweise kein Film eines Haftvermittlers erforderlich ist.

Nach Verbinden der die Abdichtmateriallagen 62, 64 bildenden Schichten 112 können die dem Gewebe oder Geflecht abgewandten Abdecklagen 114 bzw. 116 abgezogen werden, so dass die dadurch freiliegenden Dichtoberflächen 24, 26 unmittelbar an die Flächen der abzudichtenden Elemente angelegt werden können und die Abdichtmateriallagen 62, 64 aufgrund ihrer Elastizität ebenfalls als Dichtelemente wirksam sind.

Bei einem vierten Ausführungsbeispiel einer Funktionslage 12 ist zur Herstellung des Handhabungsverbunds 118 auf den die Abdichtmateriallagen 62, 64 bildenden Schichten 112, und zwar auf einer der jeweiligen Auflageseite 104, 106 abgewandten Seite, ein Klebefilm 119 zwischen der Schicht 112 und der entsprechenden Abdecklage 114 bzw. 116 vorgesehen, welcher sich durch Erwärmen oder Druck nicht verfestigt und somit nach der Herstellung des querschnittsdichten Lagenverbundes 32 zwischen den Abdichtlagen 62, 64 und dem zwischen diesen angeordneten Gewebe oder Geflecht 42, dazu dienen kann, die jeweilige Abdichtlage 62, 64 mit einem Träger oder einem Dichtelement nach Ablösen der Abdecklage 114 bzw. 116 zu verbinden.

Ein erfindungsgemäßes Funktionselement 10 wie beispielsweise im Zusammenhang mit den voranstehenden Ausführungsbeispielen beschrieben ist, lässt sich insbesondere als Flachdichtung einsetzen, beispielsweise als Flachdichtung bei Zylinderköpfen oder als Flachdichtung in Form einer Zwischenplatte zwischen Gehäuseteilen von fluidbetriebenen Steuereinheiten.

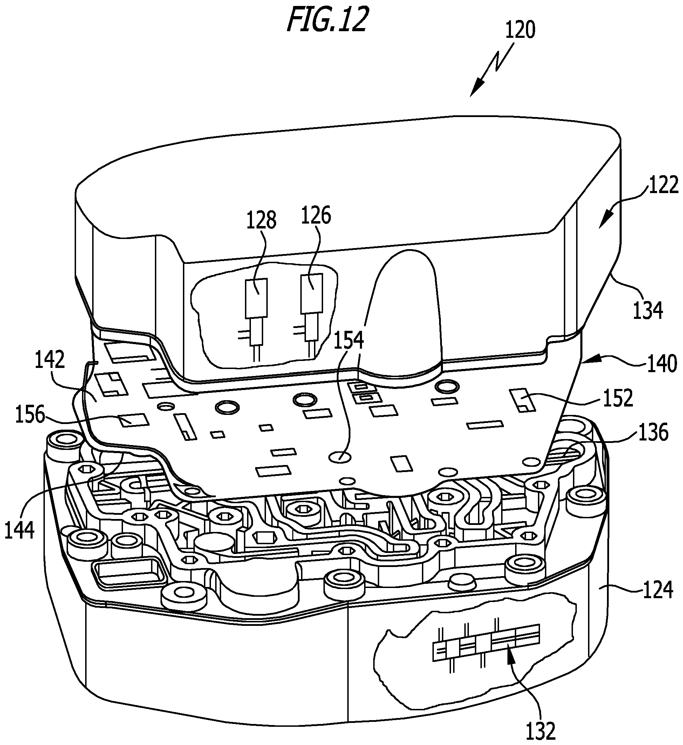

Eine derartige, mit 120 bezeichnete Steuereinheit ist beispielsweise in Fig. 12 dargestellt, wobei diese dazu dient, fluidbetriebene Verbraucher, beispielsweise fluidbetriebene Getriebeeinheiten, insbesondere Getriebeeinheiten für Kraftfahrzeuge, zu steuern.

Eine derartige Steuereinheit 120 umfasst beispielsweise ein erstes Gehäuseteil 122, das insbesondere aus Metall hergestellt ist, und ein zweites Gehäuseteil 124, ebenfalls insbesondere aus Metall hergestellt, von denen beispielsweise das erste Gehäuseteil Ventile 126 und 128 und das zweite Gehäuseteil 124 beispielsweise einen Schieber 132 aufweist, wobei diese jeweils ein Fluss von einem Fluid in dem jeweiligen Gehäuseteil 122 bzw. 124 steuern oder regeln.

Die beiden Gehäuseteile 122, 124 weisen einander zugewandte Kanalseiten 134 und 136 auf, welche so ausgebildet sind, dass das Fluid von dem einen Gehäuseteil 122, 124 in das jeweils andere Gehäuseteil 124, 126 übertreten kann.

Zwischen diesen Kanalseiten 134 und 136 der Gehäuseteile 122, 124 ist eine als Ganzes mit 140 bezeichnete Zwischenplatte eingesetzt, die an der Kanalseite 134 des ersten Gehäuseteils 122 mit einer ersten Seite 142 und an der Kanalseite 136 des zweiten Gehäuseteils 124 mit einer zweiten Seite 144 anliegt und jeweils mit den Kanalseiten 134 und 136 dicht abschließt, wobei in der Zwischenplatte 140 Durchlässe, beispielsweise die Durchlässe 152, 154 und 156, und eventuell noch weitere Durchlässe vorgesehen sind, durch welche ein Übertreten des Fluids von dem einen Gehäuseteil 122, 124 in das andere Gehäuseteil 124, 122 erfolgt.

Dabei ermöglichen einige der Durchlässe, beispielsweise die Durchlässe 152 und 156, ein ungehindertes Übertreten des Fluids von dem einen Gehäuseteil 122, 124 in das andere Gehäuseteil 124, 122, ergänzend dazu dienen einige der Durchlässe, beispielsweise der Durchlass 154, als Funktionselement zur Beeinflussung des vom einen Gehäuseteil 122, 124 in das andere Gehäuseteil 124, 122 übertretenden Fluids, wobei durch einen derartigen Durchlass 154 beispielsweise eine gezielt anpassbare Drosselwirkung zur Steuerung von Abläufen, insbesondere zeitlichen Abläufen bei Schaltvorgängen, erreicht werden kann.

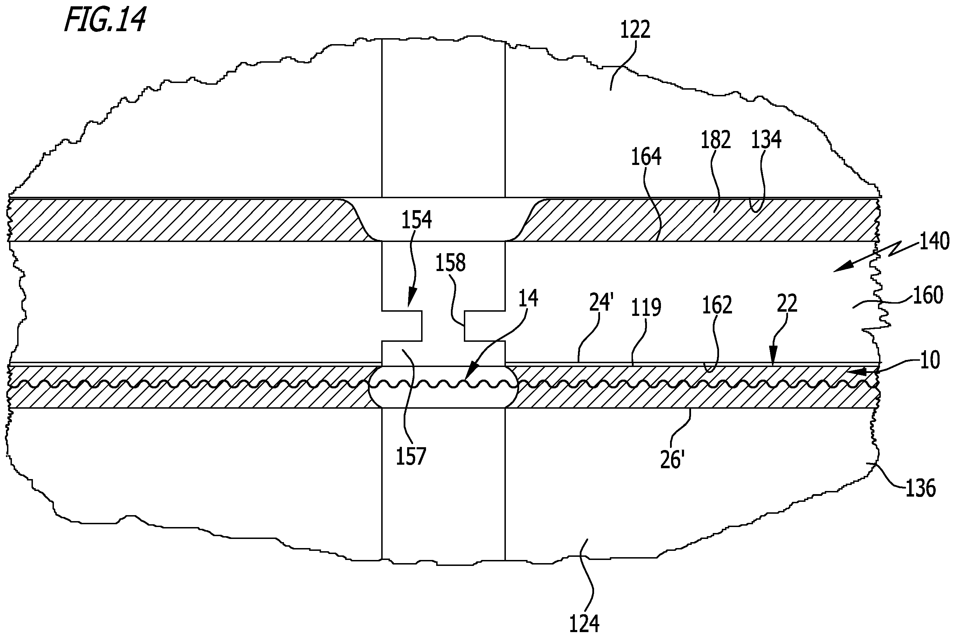

Bei der in Fig. 14 dargestellten zweiten Ausführungsform der erfindungsgemäßen Zwischenplatte 140 ist beispielsweise der Durchlass 154 durch die Zwischenplatte 140 durch eine Drosselöffnung 158 verengt, die in einer Zentraleinheit 160 der Zwischenplatte 140 angeordnet ist.

Die Zentraleinheit 160 wird beispielsweise gebildet durch eine Metallplatte.

Auf einer Seite der Zentraleinheit 160 ist beispielsweise ein erfindungsgemäßes Funktionselement 10 gemäß dem vierten Ausführungsbeispiel angeordnet, wobei dieses mit seiner durch den Klebefilm 119 gebildeten Dichtoberfläche 24' unmittelbar an einer eine Anlagefläche darstellenden Oberfläche 162 der Zentraleinheit 160 anliegt.

Die gegenüberliegende Dichtoberfläche 26' liegt an der Kanalseite 136 an, so dass das erfindungsgemäße Funktionselement 10 zwischen der höhenunelastischen Metalllage 160 und höhenunelastischen Kanalseite 136 liegt und aufgrund der geringen Oberflächenunebenheiten der Dichtoberflächen 24 und 26 mit diesen dicht abschließen kann.

Ferner ist das Funktionselement 10 so angeordnet, dass der Siebbereich 14 überlappend mit einer in die Drosselöffnung 158 übergehenden Vertiefung 157 angeordnet ist, so dass Fluid durch den Siebbereich 14 zu der Drosselöffnung 158 strömen kann.

Beispielsweise erfolgt eine Abdichtung der Zwischenplatte 140 relativ zu der Kanalseiten 134 des Gehäuseteils 122 dadurch, dass die Zentraleinheit 160 auf ihrer der Kanalseite 134 zugewandten Oberfläche 164 ein Abdichtelement 182 trägt, wobei das Dichtelemente 182 entweder als Elastomerschicht oder als metallisches Dichtelemente, beispielsweise mit Sicken, ausgebildet sein kann.

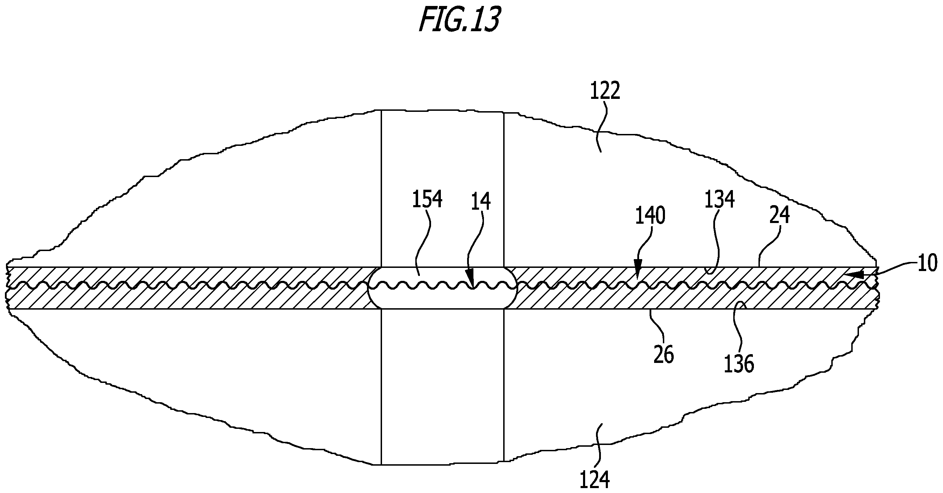

Bei einer in Fig. 13 dargestellten ersten Ausführungsform der Zwischenplatte 140' ist diese nur durch das Funktionselement 10 gemäß dem ersten, oder zweiten oder dritten Ausführungsbeispiel gebildet, das mit seinen Dichtoberflächen 24, 26 unmittelbar an den Kanalseiten 134 und 136 anliegt.

Durch die geringe Oberflächenrauigkeit von beispielsweise weniger als 10 µm erfolgt eine unmittelbare Abdichtung zu den höhenunelastisch ausgebildeten Kanalseiten 134 und 136, wobei vorzugsweise die Gehäuseteile 122, 124 so miteinander verbunden sind, dass die Kanalseiten 134 und 136 mit einer Flächenpressung von mindestens 1 MPa (Mega Pascal) an den Dichtoberflächen 24, 26 anliegen.

## Patentansprüche

1. Verfahren zum Herstellen eines Funktionselements (10), insbesondere für Flachdichtungen, bei welchem eine Funktionslage (12) mit mindestens einem Siebbereich (14) gebildet wird, in welchem zwischen Fäden (46, 48) eines Gewebes oder Geflechts (42) Durchlassöffnungen (52) zum Durchströmen für ein Fluid freiliegend sind, wobei die Funktionslage (12) mit mindestens einem zumindest den Siebbereich (14) umschließenden Abdichtbereich (22) versehen wird, **dadurch gekennzeichnet, dass** in dem Abdichtbereich (22) beiderseits des Gewebes oder Geflechts (42) auf diesem Abdichtmateriallagen (62, 64) aufgelegt werden, die zumindest bei einer flächenhaften Beaufschlagung von 5MPa oder mehr mit dem Gewebe oder Geflecht (42) einen querschnittsdichten Lagenverbund (32) ausbilden, dass die Abdichtmateriallagen (62, 64) als Bereiche von beiderseits auf das Gewebe oder Geflecht (42) auflegbaren Auflagezuschnitten (94, 96) ausgebildet werden, dass die Auflagezuschnitte (94, 96) mit mindestens einem Ausschnitt für den mindestens einen Siebbereich (14) versehen werden, und dass der mindestens eine Ausschnitt für den mindestens einen Siebbereich (14) vor Auflegen des jeweiligen Auflagenzuschnitts (94, 96) auf das Gewebe oder Geflecht (42) hergestellt wird.

2. Verfahren nach Anspruch 1, **dadurch gekennzeichnet, dass** die Abdichtmateriallagen (62, 64) aus einem formbaren Material hergestellt und beiderseits auf das Gewebe oder Geflecht (42) aufgelegt werden.

3. Verfahren nach einem der voranstehenden Ansprüche, **dadurch gekennzeichnet, dass** der formbare Zustand des Materials der Abdichtmateriallagen (62, 64) bei der Herstellung der Abdichtmateriallagen (62, 64) erzeugt wird, und dass insbesondere der formbare Zustand des Materials der Abdichtmateriallagen (62, 64) durch eine chemische Behandlung erreicht wird.

4. Verfahren nach einem der voranstehenden Ansprüche, **dadurch gekennzeichnet, dass** die Abdichtmateriallagen (62, 64) im formbaren Zustand des Materials der Abdichtmateriallagen (62, 64) zuschnittkonturstabil bleiben.

5. Verfahren nach einem der voranstehenden Ansprüche, **dadurch gekennzeichnet, dass** die Abdichtmateriallagen (62, 64) im formbaren Zustand des Materials der Abdichtmateriallagen (62, 64) plastisch an das Gewebe oder Geflecht (42) angeformt werden.

6. Verfahren nach einem der voranstehenden Ansprüche, **dadurch gekennzeichnet, dass** die Abdichtmateriallagen (62, 64) im nicht formbaren Zustand des Materials der Abdichtmateriallagen (62, 64) elastisch verformbar ausgebildet sind, und dass insbesondere die Abdichtmateriallagen im nicht formbaren Zustand des Materials der Abdichtmateriallagen höhenelastisch verformbar ausgebildet sind.

7. Verfahren nach einem der voranstehenden Ansprüche, **dadurch gekennzeichnet, dass** die Abdichtmateriallagen (62, 64) sowie das Gewebe oder Geflecht (42) klebend miteinander verbunden werden, und dass insbesondere die Abdichtmateriallagen (62, 64) aus einem das Gewebe oder Geflecht (42) benetzenden Material hergestellt werden, und dass insbesondere das Material der Abdichtmateriallagen (62, 64) an dem Gewebe oder Geflecht (42) selbstklebend haftet.

8. Verfahren nach einem der voranstehenden Ansprüche, **dadurch gekennzeichnet, dass** die Auflagezuschnitte (94, 96) mit mindestens einem Ausschnitt für mindestens einen Durchbruchbereich (16) der Funktionslage (12) versehen werden, dass insbesondere die Auflagezuschnitte (94, 96) mit mindestens einem Ausschnitt für mindestens einen Durchlassbereich (18) der Funktionslage (12) versehen werden, und dass insbesondere die Auflagezuschnitte (94, 96) vor dem Auflegen auf das Gewebe oder Geflecht (42) mit den Ausschnitten für den Durchbruchbereich (16) oder den Durchlassbereich versehen werden.

9. Verfahren nach einem der voranstehenden Ansprüche, **dadurch gekennzeichnet, dass** der jeweilige Auflagezuschnitt (94, 96) so zugeschnitten wird, dass die Abdichtmateriallagen (62, 64) für alle Abdichtbereiche (22) der Funktionslage (12) zusammenhängend miteinander verbunden sind, dass insbesondere die Abdichtmateriallagen (62, 64) als Teilbereiche von beiderseits auf einen Zuschnitt (82) des Gewebes oder Geflechts (42) insgesamt aufzulegenden Auflagezuschnitten (94, 96) gebildet werden, dass insbesondere die Auflagezuschnitte (94, 96) mit einer äußeren Zuschnittkontur versehen werden, die einer äußeren Zuschnittkontur des Zuschnitts (82) des Gewebes oder Geflechts (42) folgend verläuft, und dass insbesondere die äußere Zuschnittkontur der Auflagezuschnitte (94, 96) entsprechend der äußeren Zuschnittskontur des Zuschnitts (82) des Gewebes oder Geflechts (42) ausgebildet werden.

10. Verfahren nach einem der voranstehenden Ansprüche, **dadurch gekennzeichnet, dass** die Auflagezuschnitte (94, 96) im Einbauzustand des Funktionselements (10) in einem nicht plastischen Zustand, jedoch elastisch deformierbar sind.

11. Funktionselement (10), insbesondere für Flachdichtungen, bei welchen eine Funktionslage (12), mindestens einen Siebbereich (14) aufweist gebildet wird, in welchem zwischen Fäden (46, 48) eines Gewebes oder Geflechts (42) Durchlassöffnungen (52) zum Durchströmen für ein Fluid freiliegend sind, **dadurch gekennzeichnet, dass** die Funktionslage (12) einem zumindest den Siebbereich (14) umschließenden Abdichtbereich (22) aufweist, in welchem beiderseits des Gewebes oder Geflechts (42) auf diesem Abdichtmateriallagen (62, 64) aufliegen, die zumindest bei einer flächenhaften Beaufschlagung von 5MPa oder mehr mit dem Gewebe oder Geflecht (42) einen querschnittsdichten Lagenverbund (32) ausbilden, dass die Abdichtmateriallagen (62, 64) Bereiche von beiderseits auf dem Gewebe oder Geflecht (42) aufliegenden Auflagezuschnitten (94, 96) sind, und dass die Auflagezuschnitte (94, 96) mit mindestens einem Ausschnitt für den mindestens einen Siebbereich (14) versehen sind.

12. Funktionselement nach einem der voranstehenden Ansprüche, **dadurch gekennzeichnet, dass** die Abdichtmateriallagen (62, 64) im nicht formbaren Zustand des Materials der Abdichtmateriallagen (62, 64) elastisch verformbar sind, und dass insbesondere die Abdichtmateriallagen (62, 64) im nicht formbaren Zustand des Materials der Abdichtmateriallagen (62, 64) höhenelastisch verformbar sind.

13. Funktionselement nach einem der voranstehenden Ansprüche, **dadurch gekennzeichnet, dass** die Abdichtmateriallagen (62, 64) und das Gewebe oder Geflecht (42) durch Haftung miteinander verbunden sind.

14. Funktionselement nach einem der Ansprüche 11 bis 13, **dadurch gekennzeichnet, dass** die Auflagezuschnitte (94, 96) mit mindestens einem Ausschnitt für mindestens einen Durchbruchbereich (16) der Funktionslage (12) versehen sind.

15. Funktionselement nach einem der Ansprüche 11 bis 14, **dadurch gekennzeichnet, dass** die Auflagezuschnitte (94, 96) mit mindestens einem Ausschnitt für mindestens einen Durchlassbereich der Funktionslage (12) versehen sind, dass insbesondere die Auflagezuschnitte (94, 96) so zugeschnitten sind, dass die Abdichtmateriallagen (62, 64) für alle Abdichtbereiche (22) der Funktionslage (12) zusammenhängend miteinander verbunden sind, dass insbesondere die Abdichtmateriallagen (62, 64) als Teilbereiche von beiderseits auf einen Zuschnitt (82) des Gewebes oder Geflechts (42) insgesamt aufzulegenden Auflagezuschnitten (94, 96) gebildet sind, dass insbesondere die Auflagezuschnitte (94, 96) eine äußere Zuschnittkontur aufweisen, die einer äußeren Zuschnittkontur des Gewebes oder Geflechts (42) folgend verläuft, und dass insbesondere die äußere Zuschnittkontur der Auflagezuschnitte (94, 96) entsprechend der äußeren Zuschnittskontur des Gewebes oder Geflechts (42) ausgebildet sind.

16. Funktionselement nach einem der Ansprüche 11 bis 15, **dadurch gekennzeichnet, dass** die Auflagezuschnitte (94, 96) im Einbauzustand des Funktionselements (10) in einem nicht plastischen formbaren Zustand, jedoch elastisch deformierbar sind.

## Claims

1. Method for producing a functional element (10), in particular for flat seals, wherein a functional layer (12) is formed with at least one screen region (14) in which through openings (52) for the passage of a fluid lie exposed between threads (46, 48) of a woven or braided fabric (42), wherein the functional layer (12) is provided with at least one sealing region (22) which surrounds at least the screen region (14), **characterised in that** in the sealing region (22) sealing material layers (62, 64) are applied to both sides of the woven or braided fabric (42), said sealing material layers forming a cross-sectionally impermeable layer assembly (32) with the woven or braided fabric (42) at least with an areal application of 5 MPa or more, **in that** the sealing material layers (62, 64) are configured as regions of appliable blanks (94, 96) which are appliable to both sides of the woven or braided fabric (42), **in that** the appliable blanks (94, 96) are provided with at least one cut-out for the at least one screen region (14), and **in that** the at least one cut-out for the at least one screen region (14) is produced before the application of the respective appliable blank (94, 96) to the woven or braided fabric (42).

2. Method according to claim 1, **characterised in that** the sealing material layers (62, 64) are made of a mouldable material and are applied to both sides of the woven or braided fabric (42).

3. Method according to one of the preceding claims, **characterised in that** the mouldable state of the material of the sealing material layers (64, 62) is created during the production of the sealing material layers (62, 64), and **in that** in particular the mouldable state of the material of the sealing material layers (62, 64) is achieved by means of a chemical treatment.

4. Method according to one of the preceding claims, **characterised in that** the sealing material layers (62, 64) remain blank contour-stable in the mouldable state of the material of sealing material layers (62, 64).

5. Method according to one of the preceding claims, **characterised in that** the sealing material layers (62, 64) are plastically moulded onto the woven or braided fabric (42) in the mouldable state of the material of the sealing material layers (62, 64).

6. Method according to one of the preceding claims, **characterised in that** the sealing material layers (62, 64) are configured elastically deformable in the non-mouldable state of the material of the sealing material layers (62, 64), and **in that** in particular the sealing material layers are configured height-elastically deformable in the non-mouldable state of the material of the sealing material layers.

7. Method according to one of the preceding claims, **characterised in that** the sealing material layers (62, 64) and the woven or braided fabric (42) are adhesively connected to one another, and **in that** in particular the sealing material layers (62, 64) are produced from a material wetting the woven or braided fabric (42), and **in that** in particular the material of the sealing material layers (62, 64) adheres self-adhesively to the woven or braided fabric (42).

8. Method according to one of the preceding claims, **characterised in that** the appliable blanks (94, 96) are provided with at least one cut-out for at least one through opening region (16) of the functional layer (12), **in that** in particular the appliable blanks are provided with at least one cut-out for at least one passage region (18) of the functional layer (12), and **in that** in particular the appliable blanks (94, 96) are provided with the cut-outs for the through opening region (16) or the passage region before the application to the woven or braided fabric (42).

9. Method according to one of the preceding claims, **characterised in that** the respective appliable blank (94, 96) is cut to size such that the sealing material layers (62, 64) are connected to one another coextensively for all the sealing regions (22) of the functional layer (12), **in that** in particular the sealing material layers (62, 64) are formed as sub-regions of appliable blanks (94, 96) which are to be applied as a whole to both sides of a blank (82) of the woven or braided fabric (42), **in that** in particular the appliable blanks (94, 96) are provided with an external blank contour which extends following an external blank contour of the blank (82) of the woven or braided fabric (42), and **in that** in particular the external blank contour of the appliable blanks (94, 96) is formed according to the external blank contour of the blank (82) of the woven or braided fabric (42).

10. Method according to one of the preceding claims, **characterised in that** in the installed state of the functional element (10), the appliable blanks (94, 96) are deformable in a non-plastic state, but elastically.

11. Functional element (10), in particular for flat seals, in which a functional layer (12) comprises at least one screen region (14) in which through openings (52) for the passage of a fluid lie exposed between threads (46, 48) of a woven or braided fabric (42), **characterised in that** the functional layer (12) comprises a sealing region (22) which surrounds at least the screen region (14), in which sealing region sealing material layers (62, 64) lie on both sides of the woven or braided fabric (42), said sealing material layers (62, 64) forming a cross-sectionally impermeable layer assembly (32) with the woven or braided fabric (42) at least with an areal application of 5 MPa or more, **in that** the sealing material layers (62, 64) are regions of appliable blanks (94, 96) lying on both sides of the woven or braided fabric (42), and **in that** the appliable blanks (94, 96) are provided with at least one cut-out for the at least one screen region (14).

12. Functional element according to one of the preceding claims, **characterised in that** the sealing material layers (62, 64) are elastically deformable in the non-mouldable state of the material of the sealing material layers (62, 64), and **in that** in particular the sealing material layers (62, 64) are height-elastically deformable in the non-mouldable state of the material of the sealing material layers (62, 64).

13. Functional element according to one of the preceding claims, **characterised in that** the sealing material layers (62, 64) and the woven or braided fabric (42) are connected to one another by adhesion.

14. Functional element according to one of claims 11 to 13, **characterised in that** the appliable blanks (94, 96) are provided with at least one cut-out for at least one through opening region (16) of the functional layer (12).

15. Functional element according to one of the claims 11 to 14, **characterised in that** the appliable blanks (94, 96) are provided with at least one cut-out for at least one passage region of the functional layer (12), **in that** in particular the appliable blanks (94, 96) are cut to size such that the sealing material layers (62, 64) for all the sealing regions (22) of the functional layer (12) are connected to one another coextensively, **in that** in particular the sealing material layers (62, 64) are formed as sub-regions of appliable blanks (94, 96) which are to be applied as a whole from both sides to a blank (82) of the woven or braided fabric (42), **in that** in particular the appliable blanks (94, 96) have an external blank contour which extends following an external blank contour of the woven or braided fabric (42), and **in that** in particular the external blank contour of the appliable blanks (94, 96) is configured according to the external blank contour of the woven or braided fabric (42).

16. Functional element according to one of the claims 11 to 15, **characterised in that**, in the installed state of the functional element (10), the appliable blanks (94, 96) are deformable in a non-plastically mouldable state, but elastically.

## Revendications

1. Procédé de fabrication d'un élément fonctionnel (10), en particulier pour joints plats, selon lequel une couche fonctionnelle (12) présentant au moins une zone de criblage (14), dans laquelle des ouvertures de passage (52) permettant l'écoulement d'un fluide sont mises à découvert entre les fils (46, 48) d'un tissu ou d'une tresse (42), est formée, dans lequel la couche fonctionnelle (12) est pourvue d'au moins une zone d'étanchéité (22) entourant au moins la zone de criblage (14), **caractérisé en ce que** des couches de matériau d'étanchéité (62, 64) sont posées dans la zone d'étanchéité (22) de part et d'autre du tissu ou de la tresse (42) sur celui(celle)-ci, lesquelles, au moins dans le cas d'une sollicitation surfacique supérieure ou égale à 5 MPa, forment avec le tissu ou la tresse (42) un ensemble de couches (32) étanches dans leur section transversale, **en ce que** les couches de matériau d'étanchéité (62, 64) sont réalisées sous la forme de zones de découpes d'appui (94, 96) pouvant être posées sur le tissu ou la tresse (42) de part et d'autre de celui(celle)-ci, **en ce que** les découpes d'appui (94, 96) sont pourvues d'au moins une entaille pour la au moins une zone de criblage (14), et **en ce que** la au moins une entaille pour la au moins une zone de criblage (14) est ménagée avant la pose de la découpe d'appui (94, 96) respective sur le tissu ou la tresse (42).

2. Procédé selon la revendication 1, **caractérisé en ce que** les couches de matériau d'étanchéité (62, 64) sont fabriquées à partir d'un matériau moulable et sont posées sur le tissu ou la tresse (42) de part et d'autre de celui(celle)-ci.

3. Procédé selon l'une quelconque des revendications précédentes, **caractérisé en ce que** l'état moulable du matériau des couches de matériau d'étanchéité (62, 64) est produit lors de la fabrication des couches de matériau d'étanchéité (62, 64), et **en ce que**, en particulier, l'état moulable du matériau des couches de matériau d'étanchéité (62, 64) est obtenu par un traitement thermique.

4. Procédé selon l'une quelconque des revendications précédentes, **caractérisé en ce que** le contour de coupe des couches de matériau d'étanchéité (62, 64), dans l'état formable du matériau des couches de matériau d'étanchéité (62, 64), reste stable.

5. Procédé selon l'une quelconque des revendications précédentes, **caractérisé en ce que** les couches de matériau d'étanchéité (62, 64), dans l'état formable du matériau des couches de matériau d'étanchéité (62, 64), sont formées de manière plastique sur le tissu ou la tresse (42).

6. Procédé selon l'une quelconque des revendications précédentes, **caractérisé en ce que** les couches de matériau d'étanchéité (62, 64), dans l'état non formable du matériau des couches de matériau d'étanchéité (62, 64), sont déformables élastiquement, et **en ce que**, en particulier, les couches de matériau d'étanchéité, dans l'état non formable du matériau des couches de matériau d'étanchéité, sont déformables de manière élastique en hauteur.

7. Procédé selon l'une quelconque des revendications précédentes, **caractérisé en ce que** les couches de matériau d'étanchéité (62, 64) ainsi que le tissu ou la tresse (42) sont reliés les uns aux autres par collage, et **en ce que**, en particulier, les couches de matériau d'étanchéité (62, 64) sont fabriquées à partir d'un matériau humidifiant le tissu ou la tresse (42), et **en ce que**, en particulier, le matériau des couches de matériau d'étanchéité (62, 64) adhère de manière auto-adhésive au tissu ou à la tresse (42).

8. Procédé selon l'une quelconque des revendications précédentes, **caractérisé en ce que** les découpes d'appui (94, 96) sont pourvues d'au moins une entaille pour au moins une zone d'ouverture (16) de la couche fonctionnelle (12), et **en ce que**, en particulier, les découpes d'appui (94, 96) sont pourvues d'au moins une entaille pour au moins une zone de passage (18) de la couche fonctionnelle, et **en ce que**, en particulier, les découpes d'appui (94, 96) sont pourvues, avant d'être posées sur le tissu ou la tresse (42), des entailles pour la zone d'ouverture (16) ou la zone de passage.

9. Procédé selon l'une quelconque des revendications précédentes, **caractérisé en ce que** la découpe d'appui (94, 96) respective est découpée de sorte que les couches de matériau d'étanchéité (62, 64) sont reliées les unes aux autres de manière continue pour toutes les zones d'étanchéité (22) de la couche fonctionnelle (12), et **en ce que**, en particulier, les couches de matériau d'étanchéité (62, 64) présentent la forme de zones partielles de découpes d'appui (94, 96) à poser dans leur intégralité sur une découpe (82) du tissu ou de la tresse (42) de part et d'autre de celui(celle)-ci, **en ce que**, en particulier, les découpes d'appui (94, 96) sont pourvues d'un contour extérieur de découpe qui s'étend de manière à suivre un contour extérieur de découpe de la découpe (82) du tissu ou de la tresse (42), et **en ce que**, en particulier, le contour extérieur de découpe des découpes d'appui (94, 96) est réalisé de manière à correspondre au contour extérieur de découpe de la découpe (82) du tissu ou de la tresse (42).

10. Procédé selon l'une quelconque des revendications précédentes, **caractérisé en ce que** les découpes d'appui (94, 96), une fois l'élément fonctionnel (10) monté, sont dans un état non plastique cependant élastiquement déformables.

11. Elément fonctionnel (10), en particulier pour joints plats, pour lequel une couche fonctionnelle (12), présentant au moins une zone de criblage (14) dans laquelle des ouvertures de passage (52) permettant l'écoulement d'un fluide sont mises à découvert entre les fils (46, 48) d'un tissu ou d'une tresse (42), est formée, **caractérisé en ce que** la couche fonctionnelle (12) présente une zone d'étanchéité (22) entourant au moins la zone de criblage (14), zone d'étanchéité dans laquelle des couches de matériau d'étanchéité (62, 64) reposent de part et d'autre du tissu ou de la tresse (42) sur celui(celle)-ci, lesquelles, au moins dans le cas d'une sollicitation surfacique supérieure ou égale à 5 MPa, forment avec le tissu ou la tresse (42) un ensemble de couches (32) étanches dans leur section transversale, **en ce que** les couches de matériau d'étanchéité (62, 64) sont des zones de découpes d'appui (94, 96) reposant sur le tissu ou la tresse (42) de part et d'autre de celui(celle)-ci, et **en ce que** les découpes d'appui (94, 96) sont pourvues d'au moins une entaille pour la au moins une zone de criblage (14).

12. Elément fonctionnel selon l'une quelconque des revendications précédentes, **caractérisé en ce que** les couches de matériau d'étanchéité (62, 64) sont déformables élastiquement dans l'état non formable du matériau des couches de matériau d'étanchéité (62, 64), et **en ce que**, en particulier, les couches de matériau d'étanchéité (62, 64) sont déformables de manière élastique en hauteur dans l'état non formable du matériau des couches de matériau d'étanchéité (62, 64).

13. Elément fonctionnel selon l'une quelconque des revendications précédentes, **caractérisé en ce que** les couches de matériau d'étanchéité (62, 64) et le tissu ou la tresse (42) sont reliés les uns aux autres par adhérence.

14. Elément fonctionnel selon l'une quelconque des revendications 11 à 13, **caractérisé en ce que** les découpes d'appui (94, 96) sont pourvues d'au moins une entaille pour au moins une zone d'ouverture (16) de la couche fonctionnelle (12).

15. Elément fonctionnel selon l'une quelconque des revendications 11 à 14, **caractérisé en ce que** les découpes d'appui (94, 96) sont pourvues d'au moins une entaille pour au moins une zone de passage de la couche fonctionnelle (12), **en ce que**, en particulier, les découpes d'appui (94, 96) sont découpées de sorte que les couches de matériau d'étanchéité (62, 64) sont reliées les unes aux autres en continu pour toutes les zones d'étanchéité (22) de la couche fonctionnelle (12), **en ce que**, en particulier, les couches de matériau d'étanchéité (62, 64) présentent la forme de zones partielles de découpes d'appui (94, 96) à poser dans leur intégralité sur une découpe (82) du tissu ou de la tresse (42) de part et d'autre de celui(celle)-ci, **en ce que**, en particulier, les découpes d'appui (94, 96) présentent un contour extérieur de découpe qui s'étend de manière à suivre un contour extérieur de découpe du tissu ou de la tresse (42), et **en ce que**, en particulier, le contour extérieur de découpe des découpes d'appui (94, 96) est réalisé de manière à correspondre au contour extérieur de découpe du tissu ou de la tresse (42).

16. Elément fonctionnel selon l'une quelconque des revendications 11 à 15, **caractérisé en ce que** les découpes d'appui (94, 96), une fois l'élément fonctionnel (10) monté, sont dans un état non plastiquement formable, cependant élastiquement déformables.
